# EUROPÄISCHE PATENTSCHRIFT

(11) **EP 0 379 468 B1**
(45) Veröffentlichungstag und Bekanntmachung des Hinweises auf die Patenterteilung: **01.03.1995**
(21) Anmeldenummer: 90810030.8
(22) Anmeldetag: 11.01.1990
(51) Int. Cl.: C08G 59/32, C08G 59/06, C08L 63/00

(54) **Härtbare Epoxidharz-Stoffgemische enthaltend einen Thermoplast mit phenolischen Endgruppen**
Curable epoxy resin composition containing a thermoplastic resin having phenolic end groups
Composition de résine époxyde durcissable contenant un thermoplastique ayant des groupes phénoliques terminaux

(30) Priorität: 20.01.1989 CH 178/89
(43) Veröffentlichungstag der Anmeldung: 25.07.1990
(73) Patentinhaber: CIBA-GEIGY AG, 4002 Basel (CH)
(72) Erfinder: Schmid, Rolf, Dr., CH-3150 Schwarzenburg (CH); Eldin, Sameer H., Dr., CH-1700 Fribourg (CH)

(56) Entgegenhaltungen:
- EP-A- 0 006 535
- EP-A- 0 199 606
- EP-A- 0 204 659
- US-A- 4 322 456
- PATENT ABSTRACTS OF JAPAN, Band 1, Nr. 13(C), 22. März 1977 & JP-A-51 129 498

## Beschreibung

Die Erfindung betrifft lagerstabile, heisshärtbare Stoffgemische, die bestimmte di- und polyfunktionelle Epoxidharze, phenolische Härter und bestimmte Thermoplaste mit phenolischen Endgruppen enthalten, sowie deren Verwendung für die Herstellung geformter Gegenstände, insbesondere von Prepregs für faserverstärkte Verbundstoffe und von Klebefilmen.

Eine Vielzahl härtbarer Epoxidharz-Stoffgemische, welche u.a. auch phenolische Härter enthalten, ist bekannt. So beschreibt z.B. die JP-OS 76/129 498 Stoffgemische enthaltend polyfunktionelle Epoxidharze, phenolische Härter und Beschleuniger sowie deren Verwendung für die Herstellung von Prepregs für spezielle elektrische Isolierstoffe. Die US 4,322,456 offenbart Gemische von Epoxidharzen, phenolischen Härtern und Beschleunigern, wobei die Funktionalität der Epoxidharze und/oder der Härter vorzugsweise grösser als 2 ist, welche sich für die Herstellung von härtbaren Ueberzügen, besonders als Pulverlacke, eignen. Die US 4,288,565 beschreibt Gemische aus Epoxidharzen mit hohem und mit niederem Epoxidäquivalentgewicht und phenolischen Härtern, die zu mindestens 30 % Verbindungen mit 3 oder mehr Hydroxylgruppen pro Molekül sind.

Gegenstand vorliegender Erfindung sind lagerstabile, heisshärtbare Stoffgemische enthaltend
(a) 5-70 Gewichtsteile eines Epoxidharzes einer Funktionalität von mindestens 3,
(b) 95-30 Gewichtsteile eines Epoxidharzes einer Funktionalität von 2-2,5,
(c) ein Diphenol, wobei die Menge des Diphenols so gewählt wird, dass pro Epoxidäquivalent der Epoxidharze (a) und (b) 0,6-1,2 Hydroxyläquivalente des Diphenols (c) eingesetzt werden, und
(d) 10-150 Gewichtsteile, bezogen auf 100 Gewichtsteile der Komponenten (a) bis (c), eines mit dem Gemisch der Komponenten (a) bis (c) verträglichen Thermoplasten mit phenolischen Endgruppen und mit einer Glasumwandlungstemperatur von mindestens 150°C.

Die Komponente (d) der erfindungsgemässen Gemische muss mit dem Gemisch der Komponenten (a) bis (c) verträglich sein, d.h. sie muss in dem definitionsgemässen Mengenbereich in der Schmelze von (a) + (b) + (c) löslich sein.

Die erfindungsgemässen Gemische eignen sich für die Herstellung geformter Gegenstände, von Prepregs und Klebefilmen, und die ausgehärteten Produkte zeichnen sich durch gute Lösungsmittelbeständigkeit und vorzügliche thermische und mechanische Eigenschaften, insbesondere durch eine hohe Wärmeformbeständigkeit, eine ausgezeichnete Bruchzähigkeit, Biege- und Schlagbiegefestigkeit sowie eine sehr hohe Dehnbarkeit aus.

Ferner weisen die Gemische ausgezeichnete Verarbeitungseigenschaften auf, wie z.B. eine hohe Homogenität, eine geringe Schmelzviskosität und eine lange Topfzeit ("Pot-life"). Die erfindungsgemässen Stoffgemische ergeben nach der Härtung vernetzte Polymere mit thermoplast-ähnlichen Eigenschaften (hohe Dehnbarkeit, Bruch- und Schlagzähigkeit) ohne dass die bei der Verarbeitung von hochmolekularen Thermoplasten wegen deren sehr hoher Viskosität auftretenden Schwierigkeiten in Kauf genommen werden müssen. Die erfindungsgemässen Gemische weisen eine relativ niedere Viskosität auf und lassen sich bei tiefen Temperaturen (120 bis 200°C) problemlos verarbeiten.

Als Epoxidharze (a) und (b) kommen für die vorliegenden Gemische alle diejenigen in Betracht, die eine Funktionalität von mindestens 3 bzw. von 2-2,5 aufweisen und die mit Diphenolen (c) ausgehärtet werden können.

Als Epoxidharze mit einer Funktionalität von 3, zum Beispiel, werden solche Harze verstanden, die im Durchschnitt 3 Epoxidgruppen pro Molekül aufweisen.

Geeignet als Epoxidharze (a) und (b) sind z.B. Di- oder Polyglycidylether von cycloaliphatischen Polyolen, wie 2,2-Bis(4′-hydroxycyclohexyl)propan, Di- oder Polyglycidylether von mehrwertigen Phenolen, wie Resorcin, Bis(4′-hydroxyphenyl)methan (Bisphenol F), 2,2-Bis-(4′-hydroxyphenyl)propan (Bisphenol A), 2,2-Bis-(4′-hydroxy-3′,5′-dibromphenyl)propan, 1,1,2,2-Tetrakis(4′-hydroxyphenyl)ethan, oder Kondensationsprodukte von Phenolen mit Formaldehyd, wie Phenol-Novolake und Kresol-Novolake; ferner Di- oder Poly(β-methylglycidyl)ether der oben angeführten Polyalkohole und Polyphenole;
Polyglycidylester und Poly(β-methylglycidyl)ester von mehrwertigen Carbonsäuren, wie Phthalsäure, Terephthalsäure, Tetrahydrophthalsäure und Hexahydrophthalsäure;
Glycidylderivate von Aminophenolen, wie z.B. Triglycidyl-p-aminophenol;
N-Glycidylderivate von Aminen, Amiden und heterocyclischen Stickstoffbasen, wie N,N-Diglycidylanilin, N,N-Diglycidyltoluidin, N,N,N′,N′-Tetraglycidyl-bis(4-aminophenyl)methan, Triglycidylisocyanurat, N,N-Diglycidyl-N,N′-ethylenharnstoff, N,N′-Diglycidyl-5,5-dimethylhydantoin, N,N′-Diglycidyl-5-isopropylhydantoin, N,N′-Diglycidyl-5,5-dimethyl-6-isopropyl-5,6-dihydrouracil;
Multifunktionelle Epoxidharze, wie die in den EP 205 409 und EP 204 659 beschriebenen 2,6-Disubstituierte 4-Epoxypropylphenylglycidylether und deren Addukte;
Mit je zwei Glycidyloxy- und 2,3-Epoxypropylgruppen substituierte Bisphenole, wie z.B. das in der GB 828 364 beschriebene 2,2-Bis(3′-epoxypropyl-4′-epoxypropylphenyl)propan;
Glycidylderivate von Tetramethylol-substituierten Cyclohexanolen, Cyclohexanonen, Cyclopentanolen und Cyclopentanonen, wie die in der US 4,549,008 beschriebenen Verbindungen;
Glycidyloxy-substituierte Benzophenone und Glycidyloxydiketone, wie die in der US 4,649,181 beschriebenen Verbindungen.

Im allgemeinen können in den erfindungsgemässen Massen auch Gemische von zwei oder mehreren Epoxidharzen als Komponente (a) und/oder als Komponente (b) verwendet werden.

Besonders geeignet als Epoxidharze (a) und (b) sind Verbindungen, die einen Epoxidgehalt von 5-11 Aequivalenten/kg haben, und Glycidylether, Glycidylester oder N-Glycidylderivate einer cycloaliphatischen, einer aromatischen oder heterocyclischen Verbindung sind. Besonders bevorzugte Epoxidharze (a) und (b) sind Epoxinovolake oder Glycidylderivate eines Bisphenols, eines aromatischen Diamins, eines Aminophenols, eines Hydantoins oder eines Tetramethylolcyclohexans.

Als Epoxidharz (a) eignen sich vorzugsweise Epoxiphenolnovolake oder Glycidylderivate eines aromatischen Diamins, eines Aminophenols oder eines Tetramethylolcyclohexans. Sie weisen vorzugsweise eine Funktionalität von 3 bis 4 auf. Als Epoxidharz (b) eignen sich insbesondere Epoxiphenolnovolake oder Glycidylderivate von Bisphenol A oder von Bisphenol F. Bevorzugt weisen sie eine Funktionalität von 2 bis 2,2 auf.

Als Diphenole (c) eignen sich z.B. einkernige und mehrkernige gegebenenfalls kondensierte Benzolringe enthaltende Dihydroxyaromaten. Besonders geeignet sind Verbindungen der Formeln I, Ia oder II 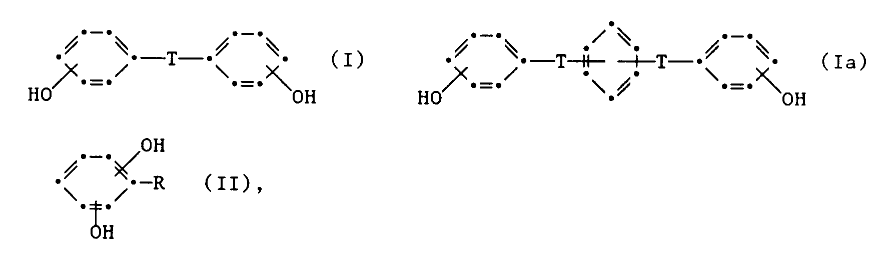
worin T die direkte Bindung, Methylen, Isopropyliden, O, S, CO oder SO₂ bedeutet und R für Wasserstoff oder C₁-C₄-Alkyl steht, Dihydroxynaphthalin oder Gemische dieser Verbindungen. Unter den Verbindungen der Formel I und Ia sind solche bevorzugt, in welchen die Hydroxylgruppen in 4,4′-Stellung gebunden sind. Geeignete Verbindungen der Formel Ia sind z.B. Verbindungen, worin T Isopropyliden bedeutet und die Benzolringe jeweils in para- oder in meta-Stellung substituiert sind. Diese Produkte sind unter der Bezeichnung Bisphenol P bzw. Bisphenol M von der Fa. Mitsui Petrochemical erhältlich. Unter den Verbindungen der Formel II ist 2,6-Dihydroxytoluol bevorzugt.

Besonders bevorzugte Diphenole (c) sind Bisphenol A, Bisphenol F, Bisphenol P, Bisphenol M, 4,4′-Dihydroxydiphenylsulfid, 2,6-Dihydroxynaphthalin und insbesondere 2,7-Dihydroxynaphthalin oder 4,4′-Dihydroxydiphenylether.

Als phenolischer Härter geeignet ist auch ein Gemisch von 2,6-Dihydroxytoluol und 2,7-Dihydroxynaphthalin. Besonders gute Resultate werden erzielt, wenn gleiche Gewichtsmengen dieser Verbindungen in der Schmelze bei ca. 180°C vermischt werden, das nach dem Erstarren der Schmelze erhaltene Produkt zu einem feinen Pulver zermahlen wird und dieses dann als Härter eingesetzt wird.

Falls zweckmässig, können die erfindungsgemässen Stoffgemische als Härter neben den Diphenolen (c) auch eine gewisse Menge eines oder mehrerer Tri-oder Polyphenole, wie z.B. 2,4,6-Tris[2′-(p-hydroxyphenyl)-2′-propyl]benzol ("Tris-TC" der Mitsui Petrochemical) enthalten. Im allgemeinen sollten aber höchstens 50 %, vorzugsweise höchstens 30 % der phenolischen Hydroxylgruppen von einem Tri- oder Polyphenol stammen, und der Rest der Hydroxylgruppen einem Diphenol gehören. Bei Verwendung von Tri- oder Polyphenolen neben den Diphenolen als Komponente (c) kann der Anteil des Epoxidharzes (a) reduziert, und der Anteil des Epoxidharzes (b) entsprechend erhöht werden. Phenol- oder Kresolnovolake sind im allgemeinen nicht als phenolische Härter der erfindungsgemässen Gemische geeignet. Es versteht sich von selber, dass bei Verwendung von sowohl Diphenolen als auch von Tri- oder Polyphenolen die Menge des gesamten phenolischen Härters (c) so gewählt wird, dass insgesamt 0,6-1,2 Hydroxyläquivalente der eingesetzten Phenole pro Epoxidäquivalent der eingesetzten Epoxidharze im erfindungsgemässen Gemisch enthalten sind.

Falls zweckmässig, können die erfindungsgemässen Gemische zusätzlich zu den Komponenten (a) bis (d) noch (c1) 0,05-5 Gew. %, bezogen auf die Epoxidharze (a) und (b), eines Beschleunigers enthalten. Gemische, welche weder als Epoxidharz (a) noch als Epoxidharz (b) ein N-Glycidylderivat enthalten, weisen vorzugsweise zusätzlich zu den Diphenolen (c) auch Beschleuniger (c1) auf.

Als Beschleuniger (c1) der härtbaren Stoffgemische eignen sich alle dem Fachmann für die Beschleunigung der Vernetzungsreaktion von Epoxidharzen mit phenolischen Härtern bekannten Verbindungen wie z.B. tertiäre Amine, deren Salze oder quaternäre Ammoniumverbindungen wie Tetramethylammoniumchlorid, Phosphoniumsalze, Alkalimetallalkoholate, wie z.B. Hatriumhexantriolat, Lewis-Säuren, z.B. BF₃ oder SnCl₄, und stickstoffhaltige Heterocyclen, wie Pyridine, Imidazole und deren Derivate. Besonders geeignet als Beschleuniger (c1) sind Imidazole und N-Acylimidazole (Imidazolide).

Beispiele für geeignete Imidazole sind Verbindungen der Formel III 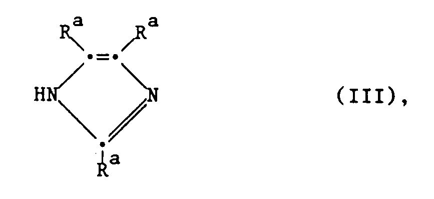
worin die Substituenten R^{a} unabhängig voneinander Wasserstoff, C₁-C₁₂-Alkyl, C₅-C₁₀-Cycloalkyl oder C₆-C₁₀-Aryl bedeuten. Bevorzugt werden insbesondere 2-Methyl-, 2-Ethyl-, 2-Phenyl- und 2-Ethyl-4-methylimidazol.

Geeignete N-Acylimidazole (Imidazolide) sind z.B. die in den US 4,436,892, US 4,587,311 und JP-OS 74/7599 beschriebenen Verbindungen. Besonders geeignet sind Verbindungen der Formel IV 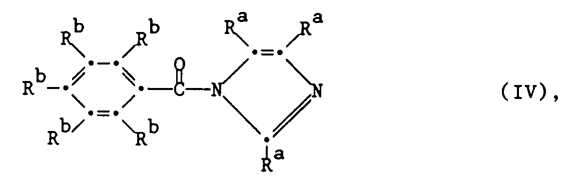
worin R^{a} die vorher angegebene Bedeutung hat und die Substituenten R^{b} unabhängig voneinander Wasserstoff, C₁-C₁₂-Alkyl, Halogen, Nitro oder Trifluormethyl sind. Beispiele geeigneter Imidazolide sind 1-(2′,4′,6′-Trimethylbenzoyl)-2-ethylimidazol, 1-(2′,6′-Dichlorbenzoyl)-2-methylimidazol, 1-(2′,4′,6′-Trimethylbenzoyl)-2-methylimidazol und 1-(2′,4′,6′-Trimethylbenzoyl)-2-phenylimidazol.

Die erfindungsgemässen Gemische können falls zweckmässig zusätzlich zu den Komponenten (a) bis (d) noch (e) einen Thermoplast ohne phenolische Endgruppen und mit einer Glasumwandlungstemperatur von mindestens 180°C enthalten, wobei die Gesamtmenge der Thermoplastkomponenten (d) und (e) 10-150 Gewichtsteile bezogen auf 100 Gewichtsteile der Komponenten (a) bis (c) beträgt, und wobei (d) vorzugsweise mindestens 30 Gew. %, insbesondere 40-70 Gew. % der Komponenten (d) und (e) ausmacht.

Als Thermoplaste (e) können in den erfindungsgemässen härtbaren Stoffgemischen all jene bekannten Polymere eingesetzt werden, die eine genügend hohe Glasumwandlungstemperatur, d.h. ≧ 180°C aufweisen und mit dem anmeldungsgemässen Epoxidharz-Härter System mischbar sind. Anhand ihrer Eigenschaften sind als Thermoplaste besonders Polysulfone, Polyethersulfone Polyimide, Polyetherimide, Polyether oder Polyetherketone geeignet. Die Glasumwandlungstemperatur der Thermoplaste liegt vorzugsweise im Bereich von 180-450°C. Dabei werden besonders Thermoplaste mit einer Glasumwandlungstemperatur von 180 bis 350, insbesondere von 190 bis 250°C, bevorzugt. Bei der Verwendung von Polyetherimiden werden insbesondere Polymere mit einer T_{g} von 220 bis 250°C, und bei der Verwendung von Polyimiden solche mit einer T_{g} von 280 bis 340°C bevorzugt. Die Thermoplaste (e) weisen vorzugsweise ein Molekulargewicht von 20'000-100'000, insbesondere von 20'000-70'000 und eine Glasumwandlungstemperatur von 240-450, insbesondere von 300-420°C auf.

Falls ein Polysulfon als Thermoplast (e) eingesetzt wird, eignen sich z.B. Verbindungen mit der wiederkehrenden Einheit der Formel

―A―SO₂―

worin A eine zweiwertige, gegebenenfalls durch Ethersauerstoffatome und/oder zweiwertige aliphatische Gruppen unterbrochene aromatische Gruppe bedeutet.

Die einzusetzenden Polysulfone können in bekannter Weise z.B. dadurch erhalten werden, dass man entweder (a) ein Sulfonylhalogenid der Formel HA₁SO₂X oder (b) ein Gemisch eines Disulfonylhalogenids der Formel XSO₂A₁SO₂X mit einer sulfonylhalogenidfreien Verbindung der Formel HA₂H, worin A₁ und A₂ gleich oder verschieden sind und jeweils eine zweiwertige gegebenenfalls durch Ethersauerstoffatome und/oder zweiwertige aliphatische Gruppen unterbrochene aromatische Gruppe bedeuten und X ein Chlor- oder Bromatom darstellt, in einem inerten Lösungsmittel in Anwesenheit eines Lewis-Säure-Katalysators erhitzt. Die nach Verfahren (a) hergestellten Polysulfone enthalten die wiederkehrende Einheit

―A₁―SO₂―,

wohingegen die nach Verfahren (b) hergestellten Polysulfone die wiederkehrende Einheit

―A₁―SO₂―A₂―SO₂―

aufweisen.

In den erfindungsgemässen Massen bevorzugt verwendet Polysulfonharze sind solche, welche Ethergruppen in der wiederkehrenden Einheit aufweisen, jedoch von seitenständigen Hydroxylgruppen frei sind. Es handelt sich dabei besonders um Polysulfone mit einer wiederkehrenden Einheit der Formel

―OA₃OA₄SO₂A₄―,

worin A₃ und A₄ zweiwertige Arylen-, insbesondere Phenylengruppen, die durch Chlor oder C₁-C₄-Alkyl, beispielsweise Methylgruppen substituiert sein können, darstellen. Man erhält derartige Polysulfone in an sich bekannter Weise durch Reaktion eines Dialkalimetallsalzes eines zweiwertigen Phenols der Formel HOA₃OH mit einem Bis-(monochloraryl)-sulfon der Formel ClA₄SO₂A₄Cl in Dimethylsulfoxid. Bevorzugtere Polysulfonharze sind solche mit einer wiederkehrenden Einheit der Formel

―OA₅―Y^{a}―A₅OA₆―SO₂―A₆―

worin A₅ und A₆ jeweils eine gegebenenfalls durch Chlor oder C₁-C₄-Alkylgruppen, wie z.B. Methylgruppen, substituierte Phenylengruppe und Y^{a} eine Kohlenstoff-Kohlenstoffbindung, die -SO₂- oder eine aliphatische Kohlenwasserstoffgruppe, insbesondere eine solche mit nicht mehr als vier Kohlenstoffatomen wie z.B. solche der Formel

―CH₂―

oder 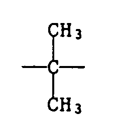
bedeuten.

Besonders bevorzugt sind thermoplastische Polysulfonharze mit wiederkehrenden Einheiten der Formel V 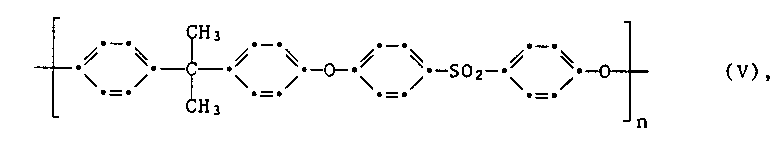
wobei n im Durchschnitt vorzugsweise einen Wert von 50-120 hat.

Besonders vorteilhafte Polysulfone sind z.B. die bei der Union Carbide Corporation erhältlichen Verbindungen, wie z.B. "Polysulfone Udel P1800", das nach Angabe des Herstellers einen Schmelzpunkt im Bereich von 350-370°C, eine Wärmeformbeständigkeit (ASTM-Spezifikation D648) von 175°C hat und im Durchschnitt pro Molekül 50-80 wiederkehrende Einheiten der Formel V enthält, wobei man von einem Molekulargewichtsbereich von ungefähr 22'000-35'000 ausgehen kann.

Weiterhin geeignet ist eine bei Union Carbide Corporation unter dem Namen "Polysulfone P2300" erhältliche ähnliche Substanz; nach Angaben des Herstellers hat diese einen Molekulargewichtsbereich von 30'000-50'000, wobei man davon ausgehen kann, dass die Substanz im Durchschnitt pro Molekül ungefähr 68-113 wiederkehrende Einheiten der Formel V enthält, sowie eine bei Union Carbide Corporation unter dem Namen "Polysulfone P3500" erhältliche ähnliche Substanz; nach Angaben des Herstellers hat diese einen Molekulargewichtsbereich, der zwischen dem von "Polysulfone Udel P1800" und jenem von "Polysulfone P2300" liegt; das Molekulargewicht beträgt ca. 35'000.

Erfindungsgemäss können als Komponente (e) auch Gemische von zwei oder mehreren Thermoplasten verwendet werden.

Besonders geeignet als Thermoplaste (e) sind Polyiimide, wie
- Polyimide mit Phenylindaneinheiten, wie sie z.B. in der US 3,856,752 und der EP-A 92 524 beschrieben sind, insbesondere solche mit einer Glasumwandlungstemperatur von etwa 305°C und einem durchschnittlichen Molekulargewicht von ca. 65'000, wie z.B. das Matrimid® 5218 der Ciba-Geigy,
- Homo- und Copolyimide aus mindestens einer aromatischen Tetracarbonsäure und mindestens einem aromatischen Diamin, wie z.B. in der US 4,629,777 offenbart und
- Homo- und Copolyimide, wie sie z.B. in den EP-A 162 017, EP-A 181 837 und US 4,629,685 beschrieben sind.

Bevorzugte Thermoplaste (e) sind auch Polyetherimide, wie z.B. die unter der Bezeichnung Ultem® (z.B. als Ultem® 1000) angebotenen Produkte der Fa. General Electric. Weitere bevorzugte Thermoplaste sind Polyethersulfone, wie z.B. Victrex PES 100 P der ICI oder Udel P 1800 der Union Carbide.

Als Thermoplaste mit phenolischen Endgruppen (d) können in den erfindungsgemässen Gemischen all jene bekannten Polymere eingesetzt werden, die eine genügend hohe Glasumwandlungstemperatur, d.h. ≧150°C aufweisen und mit dem anmeldungsgemässen Epoxidharz-Härtersystem mischbar sind. Anhand ihrer Eigenschaften besonders geeignet sind, wie oben für Thermoplaste (e) ausgeführt, Polysulfone, Polyethersulfone, Polyimide, Polyetherimide, Polyether oder Polyetherketone.

Die Thermoplaste mit phenolischen Endgruppen (d) weisen vorzugsweise ein Molekulargewicht von 2'000-100'000, insbesondere von 5'000-30'000 auf.

Geeignete Polyimide mit phenolischen Endgruppen sind z.B. die in der US 4,026,871 beschriebenen Verbindungen.

Ein geeignetes Polyethersulfon ist das unter der Bezeichnung Ultrason® 49 K vertriebene Produkt der BASF.

Der Thermoplast mit phenolischen Endgruppen (d) der erfindungsgemässen Stoffgemische ist vorzugsweise ein Polyethersulfon, ein Polyimid oder ein Polyetherimid. Besonders geeignete Polyimide oder Polyetherimide sind Verbindungen, welche als Diamin ein Phenylindandiamin und/oder ein 2,2′-Bis(aminophenoxy)biphenyl enthalten.

Die letztgenannten Polyimide bzw. Polyetherimide werden von den Polymeren der Formel VI unten mitumfasst.

Als Komponente (d) der erfindungsgemässen Stoffgemische sind auch Hydroxylgruppen-endständige stickstoffhaltige Polymere der Formel VI geeignet 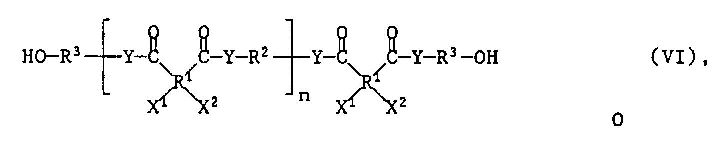
worin X¹ und X² unabhängig voneinander für -H oder 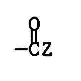
stehen, Z für OH und Y für NH steht oder Z und Y zusammen N bedeuten, n eine ganze Zahl von 1 bis 2000 ist, R¹ ein Rest ist, der mindestens einen aromatischen Ring enthält, wobei die Carbonylgruppen an verschiedene Kohlenstoffatome im Ring gebunden sind und, falls mindestens
eines von X¹ und X² für die Gruppe 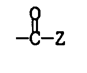
steht, sich diese Gruppe jeweils in ortho- oder peri-Stellung zur Carbonylgruppe befindet, so dass bei einer Cyclisierung fünf- oder sechsgliedrige Imidringe gebildet werden, R² einen aliphatischen Rest mit mindestens 2 C-Atomen, einen cycloaliphatischen, araliphatischen, carbocyclisch-aromatischen oder heterocyclisch-aromatischen Rest bedeutet, wobei mindestens 10 Mol % der Reste R² für einen Rest der Formel VII und/oder VIII stehen 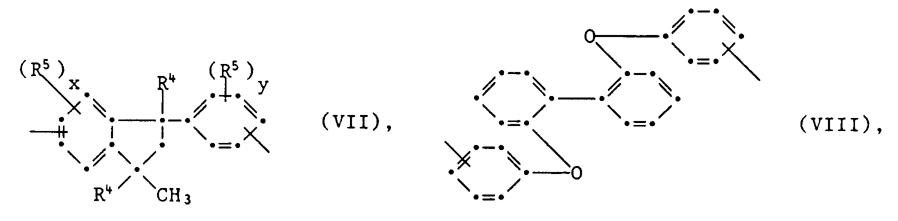
mit R⁴ gleich H oder C₁-C₄-Alkyl, die Reste R⁵ unabhängig voneinander gleich Wasserstoff, Halogen oder C₁-C₄-Alkyl, x gleich Null oder eine ganze Zahl von 1-3 und y gleich Null oder eine ganze Zahl von 1-4, und R³ ein zweiwertiger aromatischer Rest mit 6-12 C-Atomen oder ein Rest der Formel IX ist 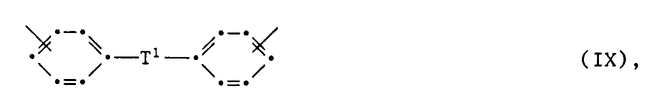
worin T¹ eine direkte Bindung, Methylen, Isopropyliden, O, CO, NH, S oder SO₂ bedeutet.

Die Polymere der Formel VI weisen im allgemeinen eine inhärente Viskosität von 0,1 bis 2,0, vorzugsweise von 0,2 bis 1,5, insbesondere von 0,2 bis 0,8 dl/g auf.

Es ist allgemein bekannt, dass die inhärente Viskosität ein Mass für das Molekulargewicht von Polymeren darstellt. Die angegebenen Werte der inhärenten Viskosität von 0,1 bis 2,0 entsprechen einem durchschnittlichen Molekulargewicht von etwa 10³ bis 10⁶.

Bevorzugt werden Polymere der Formel VI, worin n eine ganze Zahl von 2 bis 200, insbesondere von 2 bis 50 ist.

Bevorzugt werden auch Polymere der Formel VI, worin mindestens 30 Mol %, insbesondere mindestens 50 Mol % der Reste R² für eine Gruppe der Formel VII und/oder VIII stehen.

Bei den wiederkehrenden Strukturelementen der Formel VIa 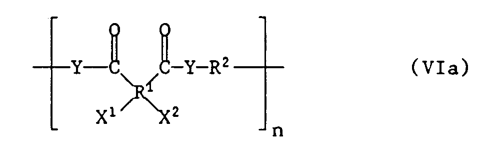
der Polymere der Formel VI können R¹, R², X¹, X² und Y unterschiedliche Bedeutung haben. Bei den Polymeren der Formel VI handelt es sich somit um Homopolymere oder um Copolymere mit statistischer Verteilung einzelner Strukturelemente mit unterschiedlicher Bedeutung von R¹, R², X¹, X² und Y.

Im Strukturelement der Formel VIa stellen X¹ und X² vorzugsweise jeweils eine Gruppe 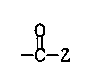
dar. Besonders bevorzugt werden dabei cyclisierte Derivate, worin Z und Y zusammen N bedeuten. Unter den Polymeren der Formel VI sind daher hydroxylgruppen-endständige Polyimide der Formel X bevorzugt 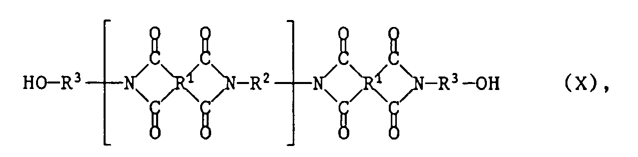
worin R¹, R², R³ und n die oben angegebene Bedeutung haben.

Die Reste R¹ der Polymere der Formel VI werden von Di-, Tri- oder Tetracarbonsäuren abgeleitet. Es kommt dabei im Prinzip jede Di-, Tri- oder Tetracarbonsäure in Frage, welche nach Entfernen der Carboxylgruppen die definitionsgemässen Reste R¹ ergibt.

Der Rest R¹ kann z.B. einen carbocyclisch-aromatischen oder heterocyclisch-aromatischen Rest oder einen Rest der neben aromatischen Ringen auch einen cycloaliphatischen Ring aufweist, wie z.B. einen Phenylindanrest, bedeuten.

Bedeutet R¹ einen carbocyclisch-aromatischen Rest, so weist dieser bevorzugt mindestens einen 6-gliedrigen Ring auf; insbesondere handelt es sich dabei um monocyclische, um kondensierte polycyclische oder um polycyclische Reste mit mehreren cyclischen, kondensierten oder nicht kondensierten Systemen, die miteinander direkt oder über Brückenglieder verbunden sein können. Als geeignete Brückenglieder seien beispielsweise erwähnt
―O―, ―CH₂CH₂―, ―CH₂―, 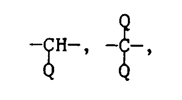
―S―S―, ―SO―, ―SO₂―, ―SO―, ―SONH―, ―CO―, 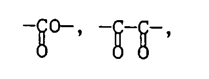
―CONH―, ―NH―CO―NH―, 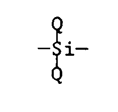
oder 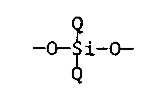
worin Q eine Alkylgruppe mit 1-6, vorzugsweise 1-4 Kohlenstoffatomen oder eine Phenylgruppe bedeutet.

Bedeutet R¹ einen heterocyclisch-aromatischen Rest, so kommen insbesondere 5- oder 6-gliedrige heterocyclisch-aromatische, gegebenenfalls benzo-kondensierte, O-, N- und/oder S-haltige Ringsysteme in Betracht.

Durch R¹ dargestellte carbocyclisch-aromatische oder heterocyclisch-aromatische Reste können auch substituiert sein, beispielsweise durch Nitrogruppen, Alkylgruppen mit 1-4 Kohlenstoffatomen, Trifluormethylgruppen, Halogenatome, insbesondere Chlor, Silyl-, Sulfonsäure- oder Sulfamoylgruppen.

R¹ bedeutet vorzugsweise einen unsubstituierten monocyclischen, einen kondensierten bicyclischen oder einen unkondensierten bicyclischen aromatischen Rest, wobei bei letzterem die Aromatenkerne über das Brückenglied -CH₂-, -O-, -CO- oder -SO₂ miteinander verbunden sind, oder einen vierwertigen Rest der Formel XI 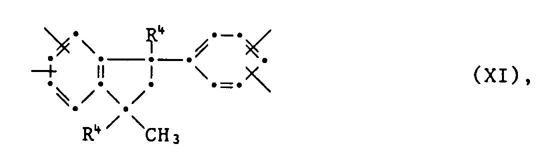
worin R⁴ die oben angegebene Bedeutung hat.

Geeignete Di-, Tri- und Tetracarbonsäuren bzw. deren Anhydride, von denen R¹ abgeleitet werden kann, sind beispielsweise Phthalsäure, Terephathalsäure, Isophthalsäure, 4,4′-Dicarboxydiphenylether, Naphthalin-2,6-dicarbonsäure, Thiophen-2,5-dicarbonsäure, Pyridin-2,3-dicarbonsäure, Trimellitsäureanhydrid, Pyromellitsäuredianhydrid, 2,3,9,10-Perylentetracarbonsäuredianhydrid, 1,4,5,8-Naphthalintetracarbonsäuredianhydrid, 2,6-Dichlornaphthalin-1,4,5,8-tetracarbonsäuredianhydrid, 2,7-Dichlornaphthalin-1,4,5,8-tetracarbonsäuredianhydrid, 2,3,6,7-Tetrachlornaphthalin-1,4,5,8-tetracarbonsäuredianhydrid, Phenanthren-1,8,9,10-tetracarbonsäuredianhydrid, 2,3,3′,4′-Benzophenontetracarbonsäuredianhydrid, 3,3′,4,4′-Benzophenontetracarbonsäuredianhydrid, 2,2′,3,3′-Benzophenontetracarbonsäuredianhydrid, 3,3′,4,4′-Biphenyltetracarbonsäuredianhydrid, 2,2′,3,3′-Biphenyltetracarbonsäuredianhydrid, 4,4′-Isopropylidendiphthalsäuredianhydrid, 3,3′-Isopropylidendiphthalsäuredianhydrid, 4,4′-Oxydiphthalsäuredianhydrid, 4,4′-Sulfonyldiphthalsäuredianhydrid, 3,3′-Oxydiphthalsäuredianhydrid, 4,4′-Methylendiphthalsäuredianhydrid, 4,4′-Thiodiphthalsäuredianhydrid, 4,4′-Ethylidendiphthalsäuredianhydrid, 2,3,6,7-Naphthalintetracarbonsäuredianhydrid, 1,2,4,5-Naphthalintetracarbonsäuredianhydrid, 1,2,5,6-Naphthalintetracarbonsäuredianhydrid, Benzol-1,2,3,4-tetracarbonsäuredianhydrid, Pyrazin-2,3,5,6-tetracarbonsäuredianhydrid, Thiophen-2,3,4,5-tetracarbonsäuredianhydrid.

Besonders geeignet sind auch Phenylindandi-, -tri- und -tetracarbonsäuren, insbesondere Phenylindandianhydride der Formel XIa 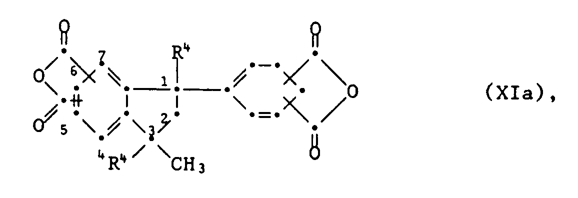
worin R⁴ Wasserstoff oder C₁-C₄-Alkyl bedeutet.

Beispiele solcher Dianhydride sind: 1-(3′,4′-Dicarboxyphenyl)-1,3,3-trimethylindan-5,6-dicarbonsäuredianhydrid, 1-(3′,4′-Dicarboxyphenyl)-1,3,3-trimethylindan-6,7-dicarbonsäuredianhydrid, 1-(3′,4′-Dicarboxyphenyl)-3-methylindan-5,6-dicarbonsäuredianhydrid und 1-(3′,4′-Dicarboxyphenyl)-3-methylindan-6,7-dicarbonsäuredianhydrid. Solche Phenylindandianhydride und deren Herstellung sind in der US 3,577,442 beschrieben.

Besonders bevorzugt werden Polymere der Formel VI worin R¹ ein Rest der Formel XI mit R⁴ gleich Methyl, oder ein Rest der Formel XII ist 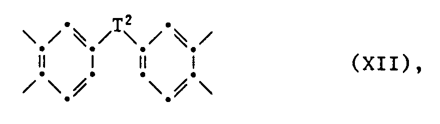
worin T² CH₂, O, SO₂ oder insbesondere CO bedeutet.

Der Rest R² der Polymere der Formel VI ist zu mindestens 10 Mol % eine Gruppe der Formel VII und/oder VIII. Dieser Rest wird von den entsprechenden Diaminen, von einem Phenylindandiamin bzw. einem 2,2′-Bis(aminophenoxy)biphenyl abgeleitet. Der restliche Teil, d.h. höchstens 90 Mol % der Diaminkomponente H₂N-R²-NH₂ kann jedes Diamin, von dem der definitionsgemässe Rest R³ abgeleitet wird, sein.

Bevorzugt werden Polymere, welche als R² sowohl den Rest der Formel VII als auch den Rest der Formel VIII enthalten, insbesondere solche, worin R² ausschliesslich Gruppen der Formel VII und der Formel VIII bedeutet. Dabei bestehen die Reste R² vorzugsweise zu 20-99 Mol %, insbesondere zu 60-99 Mol % aus Gruppen der Formel VII und zu 80-1 Mol %, insbesondere zu 40-1 Mol % aus Gruppen der Formel VIII. Am meisten bevorzugt werden Polymere, worin R² zu 90-99 Mol % aus Gruppen der Formel VII und zu 10-1 Mol % aus Gruppen der Formel VIII besteht.

Die Phenylindandiamin-Komponente der Polymere der Formel VI kann aus irgendeiner Kombination von Isomeren der durch die Formel VIIa bezeichneten Diaminoverbindungen bestehen, 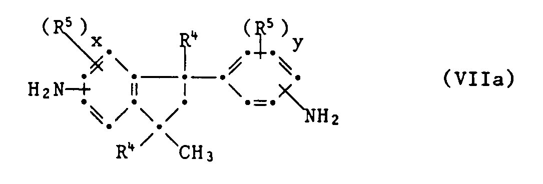
worin R⁴, R⁵, x und y die oben angegebene Bedeutung haben.

Die Phenylindandiamin-Komponente kann z.B. von 0 bis 100 Gew.-% 5-Amino-1-(4′-aminophenyl)-1,3,3-trimethylindan in Kombination mit 100 bis 0 Gew.-% 6-Amino-1-(4′-aminophenyl)-1,3,3-trimethylindan enthalten. Weiterhin können eines oder beide dieser Iosmeren im ganzen Bereich von 0 bis 100 Gew.-% durch irgendeines der mit der Formel VIIa bezeichneten substituierten Diaminoisomeren ersetzt werdeen. Beispiele solcher substituierter Diaminoisomeren sind 5-Amino-6-methyl-1-(3′-amino-4′-methylphenyl)-1,3,3-trimethylindan, 5-Amno-1-(4′-amino-Ar′,Ar′-dichlorphenyl)-Ar,Ar-dichlor-1,3,3-trimethylindan, 6-Amino-1-(4′-amino-Ar′,Ar′-dichlorphenyl)-Ar,Ar-dichlor-1,3,3-trimethylindan, 4-Amino-6-methyl-1-(3′-amino-4′-methylphenyl)-1,3,3-trimethylindan und Ar-Amino-1-(Ar′-amino-2′,4′-dimethylphenyl)-1,3,3,4,6-pentamethylindan. Ar und Ar′ in den obenerwähnten Verbindungen bezeichnen unbestimmte Stellungen der entsprechenden Substituenten an den Phenylringen.

Unter den Phenylindandiaminen der Formel VIIa werden solche bevorzugt, worin R⁴ Wasserstoff oder Methyl ist, und R⁵ unabhängig voneinander Methyl, Chlor oder Brom sind und die Aminogruppen in Stellung 5, 6 oder 7 und in Stellung 3′ oder 4′ sind. Am meisten bevorzugt sind Phenylindandiamine der Formel VIIa worin R⁴ Methyl ist, x und y jeweils Null sind, und die Aminogruppen in Stellung 5 oder 6 und in Stellung 4′ sind.

Verschiedene Polyimide auf der Basis von Phenylindandiaminen und deren Synthesemethoden sind ausführlich in der US 3,856,752 beschrieben.

2,2′-Bis(aminophenoxy)biphenyle der Formel VIIIa 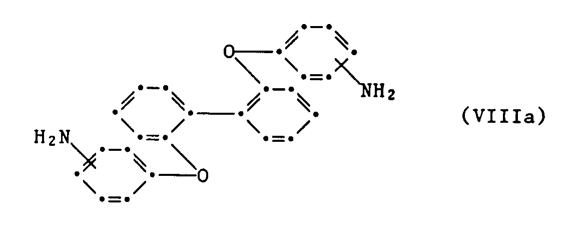
und deren Herstellung sind in der US 4,196,144 beschrieben. Erfindungsgemäss werden als Diaminkomponente vorzugsweise Diamine der Formel VIIIa eingesetzt, worin die zwei Aminogruppen jeweils in der ortho-und insbesondere in der para-Stellung des Benzolrings sind.

Durch R² dargestellte aliphatische, araliphatische, cycloaliphatische, carbocyclisch-aromatische oder heterocyclisch-aromatische Reste können unsubstituiert oder substituiert sein, z.B. durch Halogenatome, wie Fluor, Chlor oder Brom, oder durch Alkyl- oder Alkoxygruppen mit je 1-4 Kohlenstoffatomen.

Als aliphatische Reste R² kommen vor allem geradkettige oder verzweigte Alkylengruppen mit 2-12 Kohlenstoffatomen in Betracht, wobei die Alkylenkette auch durch Heteroatome, wie O-, S- oder N-Atome, unterbrochen sein kann.

R² in der Bedeutung eines cycloaliphatischen Restes stellt z.B. die 1,3- oder 1,4-Cyclohexylen-, 1,4-Bis(methylen)cyclohexan- oder Dicyclohexylmethangruppe dar, während als araliphatische Reste vor allem 1,3-, 1,4- oder 2,4-Bis-alkylenbenzol-, 4,4′-Bisalkylen-diphenyl- und 4,4′-Bisalkylen-diphenyletherreste in Betracht kommen.

Stellt R² einen carbocyclisch-aroamtischen Rest dar, so handelt es sich dabei vorzugsweise um monocyclische, um kondensierte polycyclische oder um unkondensierte bicyclische aromatische Reste, wobei bei letzteren die Aromatenkerne über ein Brückenglied miteinander verbunden sind. Als Brückenglieder kommen z.B. die als T¹ in Formel IX oben bezeichneten Reste in Betracht.

Falls R² einen heterocyclisch-aromatischen Rest bedeutet, so handelt es sich insbesondere um heterocyclisch-aromatische 5- oder 6-gliedrige, O-, N- und/oder S-haltige Ringe.

Geeignete Diamine H₂N-R²-NH₂ sind zum Beispiel o-, m- und p-Phenylendiamin- Diaminotoluole, wie 2,4-Diaminotoluol, 1,4-Diamino-2-methoxybenzol, 2,5-Diaminoxylol, 1,3-Diamino-4-chlorbenzol, 4,4′-Diaminodiphenylmethan, 4,4′-Diaminodiphenylether, 4,4′-Diaminodiphenylthioether, 4,4′-Diaminodiphenylsulfon, 2,2′-Diaminobenzophenon, 1,8- oder 1,5-Diaminonaphthalin, 2,6-Diaminopyridin, 1,4-Piperazin, 2,4-Diaminopyrimidin, 2,4-Diamino-s-triazin, Di-, Tri-, Tetra-, Hexa-, Hepta-, Octa- und Decamethylendiamin, 2,2-Dimethylpropylendiamin, 2,5-Dimethylhexamethylendiamin, 4,4-Dimethylheptamethylendiamin, 3-Methylheptamethylendiamin, 3-Methoxyhexamethyldiamin, 2,11-Diaminododecan, 2,2,4- und 2,4,4-Trimethylhexamethylendiamin, 1,2-Bis(3-aminopropoxy)ethan, N,N′-Dimethylethylendiamin, N,N′-Dimethyl-1,6-diaminohexan sowie die Diamine der Formeln H₂N(CH₂)₃O(CH₂)₂O(CH₂)₃NH₂ und H₂N(CH₂)₃S(CH₂)₃NH₂; 1,4-Diaminocyclohexan, 1,4-Bis(2-methyl-4-aminopentyl)benzol, 1,4-Bis(aminomethyl)benzol.

Besonders bevorzugt als Diamin-Komponente werden carbocyclisch-aromatische Diamine, insbesondere substituierte zweikernige Diamine, wie beispielsweise Bis(4-amino-3,5-dialkylphenyl)methane oder Bis(4-amino-3-chlor-5-alkylphenyl)methane. Diese Verbindungen sind zum Beispiel in der EP-A 171,588 beschrieben. Geeignete solche Diamine sind beispielsweise Bis(3-methyl-4-amino-5-ethylphenyl)methan, Bis(3-methyl-4-amino-5-isopropylphenyl)methan, Bis(3,5-diisopropyl-4-aminophenyl)methan, Bis(2-chlor-3,5-diethyl-4-aminophenyl)methan, Bis(3-ethyl-4-amino-5-sek.-butylphenyl)methan, Bis(2,6-dichlor-3,5-diethyl-4-aminophenyl)methan und insbesondere Bis(3,5-diethyl-4-aminophenyl)methan.

Der Rest R³ der erfindungsgemässen Polymere wird von Aminophenolen der Formel XVI, H₂N-R³-OH abgeleitet. Bedeutet R³ einen zweiwertigen aromatischen Rest mit 6-12 C-Atomen, kann dieser unsubstituiert sein oder einen oder mehrere C₁-C₄-Alkylgruppen oder Halogenatome, insbesondere Chlor oder Brom als Substituenten enthalten.

Bevorzugt werden Polymere, worin R³ 1,2-, 1,3- oder 1,4-Phenylen oder einen Rest der Formel IX bedeutet, worin die freien Bindungen in 4,4′-Stellung sind. Besonders bevorzugt als R³ ist ein Rest der Formel 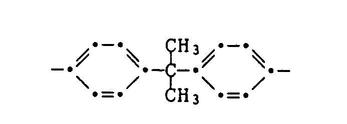
oder insbesondere 1,4-Phenylen.

Die Polymere der Formel VI, die hydroxylgruppen-endständigen Polyamide, Polyamid-amidsäuren, Polyamidsäuren sowie die zum entsprechenden Polyamidimid oder Polyimid cyclisierten Derivate, können hergestellt werden durch Umsetzung eines Diamins der Formel XIII

H₂N-R²-NH₂ (XIII)

mit einem amidbildenden Derivat einer Di-, Tri- oder Tetracarbonsäure der Formel XIV 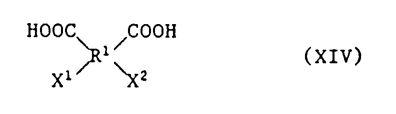
zu einem Polymer der Formel XV 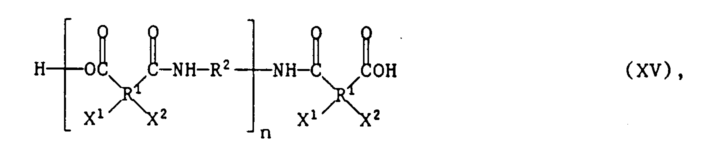
und anschliessende Umsetzung dieses Polymers oder dessen amidbildenden Derivats mit einem Aminophenol der Formel XVI

H₂N-R³-OH (XVI),

gegebenenfalls gefolgt von einer Cyclisierung der so erhaltenen Polymeren, falls X¹ und/oder X² 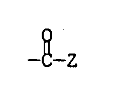
bedeuten, zu den entsprechenden Imiden, wobei die Verbindungen der Formeln XIII, XIV, XV und XVI jeweils im wesentlichen in stöchiometrischem Verhältnis eingesetzt werden, und wobei R¹, R², R³, X¹, X², Z und n die oben angegebene Bedeutung haben.

Geeignete amidbildende Derivate der Carbonsäuren der Formeln XIV oder XV sind z.B. deren Ester, Halogenide, wie Chloride, oder Anhydride.

Im allgemeinen führt man die oben angegebene Umsetzung in einem üblichen inerten organischen Lösungsmittel, vorzugsweise in einem polaren, aprotischen Lösungsmittel, wie beispielsweise Dimethylsulfoxid, N,N-Dimethylformamid, N,N-Dimethylacetamid, N,N-Diethylacetamid, Tetramethylharnstoff, N-Methylcaprolactam, N-Methyl-2-pyrrolidon, Aceton, Dioxan, Essigester oder Tetrahydrofuran, durch. Dabei werden Temperaturen von etwa -20°C bis etwa 50°C angewendet.

Die allfällige Cyclisierung der so erhaltenen Polyamid-amidsäuren oder Polyamidsäuren erfolgt nach an sich bekannter Weise chemisch oder thermisch.

Die chemische Cyclisierung wird zweckmässig durch Behandlung mit einem Dehydratisierungsmittel allein oder im Gemisch mit einem tertiären Amin vorgenommen. In Frage kommen z.B. Essigsäureanhydrid, Propionsäureanhydrid und Dicyclohexylcarbodiimid oder Gemisch von Essigsäureanhydrid und Triethylamin.

Die thermische Cyclisierung wird durch Erhitzen auf Temperaturen von etwa 50°C bis 300°C, vorzugsweise etwa 150°C bis 250°C, und gegebenenfalls unter Zusatz eines inerten organischen Lösungsmittels vorgenommen.

Die in den erfindungsgemässen Gemischen eingesetzten Komponenten (a) bis (e) sind mit der Ausnahme der Polymere der Formel VI durchwegs bekannte Verbindungen und können auf bekannte Weise hergestellt werden.

Besonders bevorzugte erfindungsgemässe härtbare Gemische sind solche enthaltend 15 bis 50 Gewichtsteile des Epoxidharzes (a),
85 bis 50 Gewichtsteile des Epoxidharzes (b), eine Menge des Diphenols (c), so dass 0,7-1,1, vorzugsweise 0,8-1,0, Hydroxyläquivalente des Diphenols pro Epoxidäquivalent der Harze (a) und (b) eingesetzt werden, gegebenenfalls 0,1-1 Gew.% des Beschleunigers (c1) bezogen auf die Menge von (a) und (b) und 20-130, vorzugsweise 30-120, und insbesondere 70-120 Gewichtsteile des Thermoplasten (d) und gegebenenfalls (e) bezogen auf 100 Gewichtsteile der Komponenten (a) bis (c).

Unter den erfindungsgemässen Gemischen, welche auch die Thermoplast-Kompnente (e) enthalten, werden solche bevorzugt, bei denen sowohl die Komponente (d) als auch die Komponente (e) 7hermoplasten des gleichen Typs sind, wie z.B. beides Polyimide, oder Polyethersulfone, sind. Da die Thermoplaste mit phenolischen Endgruppen (d) über diese Gruppen mit Epoxidharzen reagieren können, entstehen nach der Härtung einphasige homogene Produkte. Bei Verwendung eines nicht-reaktiven Thermoplasten (e) des gleichen Typs wie (d) resultieren härtbare Gemische mit besserer Verträglichkeit der Thermoplast-Komponente (e) mit dem Epoxidharzsystem.

Besonders vorteilhaft ist es zudem, dass das Molekulargewicht der Komponente (d) ohne Einbussen in den Zähigkeitseigenschaften der aus den erfindungsgemässen Gemischen erhältlichen vernetzten Produkte beliebig variiert werden kann. Eine Verwendung von Thermoplasten (d) mit tieferem Molekulargewicht (z.B. unter 30'000) bringt manchmal Vorteile bei der Applikation der Gemische, da sich diese durch eine besonders tiefe Schmelzviskosität auszeichnen. Bei Thermoplasten ohne gegenüber den Epoxidharzen reaktiven Endgruppen, führt die Verwendung von relativ kurzkettigen Polymeren mit tieferem Molekulargewicht zu kaum brauchbaren spröden Produkten, während hochmolekulare Thermoplasten wegen ihrer hohen Schmelzviskosität Probleme bei der Verarbeitung der Stoffgemische verursachen.

Die erfindungsgemässen Gemische können durch gutes Durchmischen bzw. Ineinanderlösen aller Komponenten bereitgestellt werden, wobei die einzelnen Komponenten in verschiedener Reihenfolge beigegeben werden können. Der Thermoplast kann z.B. unter Erhitzen im Epoxidharz und im phenolischen Härter gelöst werden, und nach Abkühlen können der Beschleuniger und gegebenenfalls weitere Zusätze beigegeben werden. Man kann aber auch eine Lösung des Thermoplasten (d) und gegebenenfalls (e) in einem inerten Lösungsmittel, wie z.B. in Methylenchlorid, herstellen und diese mit dem Epoxidharz-Härter Gemisch vermischen.

Die erfindungsgemässen Gemische können vielseitig angewendet werden und eignen sich beispielsweise als Giessharze, Laminier- oder Tränkharze, Formmassen, Dichtungsmassen, Einbettungs- und Isoliermassen für die Elektrotechnik und vorzugsweise als Klebstoffe und als Matrixharze für Verbundstoffe, insbesondere zur Herstellung von faserverstärkten Kunststoffen.

Gewünschtenfalls, insbesondere bei der Mitverwendung von Modifizierungsmitteln, können die erfindungsgemässen Gemische in einem organischen Lösungsmittel, wie Toluol, Xylol, Methylethylketon, Methylenchlorid oder einem ähnlichen, in der Lackindustrie üblichen Lösungsmittel oder Lösungsmittelgemisch gelöst werden. Solche Lösungen eignen sich vor allem als Imprägniermittel oder Beschichtungsmittel.

Die erfindungsgemässen härtbaren Mischungen können ferner vor der Härtung in irgendeiner Phase mit üblichen Modifizierungsmitteln, wie Streck-, Füll- und Verstärkungsmitteln, Pigmenten, Farbstoffen, organischen Lösungsmitteln, Weichmachern, Verlaufmitteln, Thixotropiermitteln, flammhemmenden Stoffen oder Formtrennmitteln, versetzt werden. Als Streckmittel, Verstärkungsmittel, Füllmittel und Pigmente, die in den erfindungsgemässen härtbaren Mischungen eingesetzt werden können, seien z.B. genannt: flüssige Cumaron-Inden-Harze, Textilfasern, Glasfasern, Asbestfasern, Borfasern, Kohlenstoffasern, Polyethylenpulver, Polypropylenpulver, Quarzmehl, mineralische Silikate, wie Glimmer, Asbestmehl, Schiefermehl, Kaolin, Kreidemehl, Antimontrioxid, Bentone, Lithopone, Schwerspat, Titandioxid, Russ, Graphit, Oxidfarben, wie Eisenoxid, oder Metallpulver, wie Aluminiumpulver oder Eisenpulver. Falls die erfindungsgemässen Mischungen für die Herstellung von Prepregs eingesetzt werden, ist eine Zugabe von Kurzfasern besonders erwünscht.

Als Verlaufmittel beim Einsatz der härtbaren Mischungen speziell im Oberflächenschutz, kann man z.B. Silikone, flüssige Acrylharze, Celluloseacetobutyrat, Polyvinylbutyral, Wachse, Stearate etc. (welche z.T. auch als Formtrennmittel Anwendung finden) zusetzen.

Als Weichmacher können für die Modifizierung der härtbaren Mischungen z.B. Dibutyl-, Dioctyl- und Dinonylphthalat, Trikresylphosphat, Trixylenylphosphat und Diphenoxyethylformal eingesetzt werden.

Die erfindungsgemässen Gemische werden vorzugsweise gehärtet, indem man sie auf eine Temperatur im Bereich von 120 bis 250°C, insbesondere 160° bis 220°C erhitzt. Man kann die Härtung in bekannter Weise auch zwei- oder mehrstufig durchführen, wobei man die erste Härtungsstufe bei niedriger Temperatur und die Nachhärtung bei höherer Temperatur durchführt.

Gewünschtenfalls kann man den härtbaren Gemischen zur Herabsetzung der Viskosität aktive Verdünner, wie z.B. Neopentylglykol-, Butandiol- oder Hexandiol-Diglycidylether, zusetzen.

Gegenstand der vorliegenden Erfindung ist auch die Verwendung der erfindungsgemässen Gemische zur Herstellung von gehärteten Formkörpern, sowie die Verwendung zur Herstellung von Prepregs für faserverstärkte Verbundstoffe oder zur Herstellung von Klebefilmen. Die Prepregs und die Klebefilme können in an sich bekannter Weise hergestellt werden, z.B. im Imprägnierverfahren in Anwesenheit eines der oben erwähnten Lösungsmittel, eines halogenierten Lösungsmittels, wie z.B. Methylenchlorid, oder im sogenannten "hot melt"-Verfahren.

Die erfindungsgemässen Formstoffe zeichnen sich im allgemeinen durch hohe Glasumwandlungstemperaturen bei gleichzeitig hohen mechanischen Festigkeiten, und insbesondere durch eine ausgezeichnete Bruchzähigkeit, Biege- und Schlagbiegefestigkeit sowie eine sehr hohe Dehnbarkeit aus.

Die folgenden Beispiele erläutern die Erfindung.

### I. Herstellungsbeispiele

### Beispiel 1: Synthese eines Polyetherimids mit phenolischen Endgruppen (Formelmolekulargewicht 20'000)

### Ansatz:

I 4,49 g (0,0122 Mol, 5 Mol %) 2,2′-Bis(p-aminophenoxy)biphenyl
II 61,49 g (0,2317 Mol, 95 Mol %) 5(6)-Amino-1-(4′-aminophenyl)-1,3,3-trimethylindan (Isomerengemisch)
III 80,56 g (0,250 Mol) 3,3′,4,4′-Benzophenontetracarbonsäuredianhydrid
IV 1,33 g (0,0122 Mol) 4-Aminophenol
V 1300 ml N,N-Dimethylacetamid
VI 63,8 g (0,625 Mol) Essigsäureanhydrid
VII 12,65 g (0,125 Mol) Triethylamin

In einem 2,5 l Sulfurierkolben mit Thermometer, Glaspropellerrührer, Kühler, Kühlbad und N₂-Anschluss werden I, II und V unter Stickstoff vorgelegt und die entstehende klare, hellrotbraune Lösung wird auf -15°C abgekühlt. Anschliessend wird III in die Lösung eingetragen und die resultierende Suspension wird während 2 h unter langsamer Erwärmung auf 12°C weitergerührt. Es entsteht eine gelbliche Lösung. IV wird dazugegeben und während einer weiteren Stunde nachgerührt. Die Temperatur steigt dabei von 13 auf 19°C an. Bei 19°C werden VI und VII beigegeben. Die Temperatur steigt dabei auf 27°C. Das Gemisch wird während ca. 19 h bei Raumtemperatur gerührt. Zur Isolierung des Polyimids wird die rötlich-gelbe Lösung in Wasser eingetragen (Mixer) und mit Wasser und Ethanol gewaschen. Das Produkt (hellgelbes, feines Pulver) wird im Vakuum bei 70 - 80°C getrocknet. Ausbeute 138,7 g (94 % d.Th.)

### Produkte-Charakterisierung:

ηᵢₙₕ: 0,673 dl/g (0,5 % in N,N-Dimethylacetamid bei 25°C).

### Beispiel 2: Synthese eines Polyetherimids mit phenolischen Endgruppen (Formelmolekulargewicht 12'500)

Beispiel 1 wird unter Verwendung der unten aufgeführten Edukte wiederholt. Da die Menge von 4-Aminophenol im Vergleich zu den zwei Diaminen etwas grösser ist, erhält man ein Polyetherimid mit kleinerem Molekulargewicht (tiefere ηᵢₙₕ).

### Ansatz:

I 4,42 g (0,0120 Mol, 5 Mol %) 2,2′-Bis(p-aminophenoxy)biphenyl
II 60,60 g (0,2284 Mol, 95 Mol %) 5(6)-Amino-1-(4′aminophenyl)-1,3,3-trimethylindan (Isomerengemisch)
III 80,56 g (0,250 Mol) 3,3′,4,4′-Benzophenontetracarbonsäureanhydrid
IV 2,10 g (0,0192 Mol) 4-Aminophenol
V 1300 ml N,N-Dimethylacetamid
VI 63,8 g (0,625 Mol) Essigsäureanhydrid
VII 12,65 g (0,125 Mol) Triethylamin

Ausbeute 139,8 g (95 % d.Th.)
ηᵢₙₕ: 0,426 dl/g (0,5 % in N,N-Dimethylacetamid bei 25°C).

### Beispiel 3: Synthese eines Polyetherimids mit phenolischen Endgruppen (Formelmolekulargewicht 5'000)

Beispiel 1 wird unter Verwendung der unten aufgeführten Edukte wiederholt. Eine weitere Erhöhung der Menge von 4-Aminophenol führt zu einem Polyetherimid mit noch kleinerem Molekulargewicht.

### Ansatz:

I 4,14 g (0,0113 Mol, 5 Mol %) 2,2′-Bis(p-aminophenoxy)biphenyl
II 56,71 g (0,2138 Mol, 95 Mol %) 5(6)-Amino-1-(4′-aminophenyl)-1,3,3-trimethylindan (Isomerengemisch)
III 80,56 g (0,250 Mol) 3,3′,4,4′-Benzophenontetracarbonsäureanhydrid
IV 5,46 g (0,050 Mol) 4-Aminophenol
V 1300 ml N,N-Dimethylacetamid
VI 63,8 g (0,625 Mol) Essigsäureanhydrid
VII 12,65 g (0,125 Mol) Triethylamin

Ausbeute 133,2 g (91 % d.Th.)
ηᵢₙₕ: 0,223 dl/g (0,5 % in N,N-Dimethylacetamid bei 25°C).

### Beispiel 4: Synthese eines Polyetherimids mit phenolischen Endgruppen (Formelmolekulargewicht 12'500)

Beispiel 1 wird unter Verwendung der unten aufgeführten Edukte wiederholt. Die Diamine I und II werden in äquimolaren Mengen eingesezt.

### Ansatz:

I 43,80 g (0,119 Mol, 50 Mol %) 2,2′-Bis(p-aminophenoxy)biphenyl
II 31,58 g (0,119 Mol, 50 Mol %) 5(6)-Amino-1-(4′-aminophenyl)-1,3,3-trimethylindan (Isomerengemisch)
III 80,56 g (0,250 Mol) 3,3′,4,4′-Benzophenontetracarbonsäuredianhydrid
IV 2,60 g (0,0238 Mol) 4-Aminophenol
V 1300 ml N,N-Dimethylacetamid
VI 63,8 g (0,625 Mol) Essigsäureanhydrid
VII 12,65 g (0,125 Mol) Triethylamin

Ausbeute 151,2 g (95 % d.Th.)
ηᵢₙₕ: 0,383 dl/g (0,5 % in N,N-Dimethylacetamid bei 25°C).

Die in den folgenden Anwendungsbeispielen verwendeten Komponenten (a)-(e) sind wie folgt:
Epoxidharz a1: Ein Tetraglycidylderivat von 4,4′-Diaminodiphenylmethan mit einem Epoxidgehalt von 7,8 Aequivalenten/kg und einer Viskosität bei 50°C von ca. 1,3 Pa·s.

Epoxidharz a2: Ein Epoxiphenolnovolak einer Funktionalität von 3,6 mit einem Epoxidgehalt von 5,6 Aequivalenten/kg, einer Viskosität bei 50°C von ca. 40 Pa·s und einer mittleren Funktionalität von 3,2 Epoxidgruppen pro Molekül.

Epoxidharz a3: Tetraglycidylether von 2,2,6,6-Tetramethylolcyclohexanol (hergestellt gemäss Beispiel 2 der US 4,549,008) mit einem Epoxidäquivalentgewicht von 129.

Epoxidharz b1: Ein bei Raumtemperatur flüssiger Epoxiphenolnovolak einer Funktionalität von 2,2 mit einem Epoxidgehalt von 5,7 Aequivalenten/kg und einer Viskosität bei 50°C von 1,4 Pa·s.

Polyetherimid mit OH-Endgruppen: Polyetherimid hergestellt gemäss einem der Beispiele 1-4, oben.

Polyethersulfon mit OH-Endgruppen: Ultrason® 49K der BASF (Polyethersulfon mit phenolischen Endgruppen mit einem Molekulargewicht von ca. 11'000).

Polyethersulfon 1: Victrex® 100P der ICI mit eine Molekulargewicht von ca. 25'000, einer Glasumwandlungstemperatur von 210°C und wiederkehrenden Einheiten der Formel

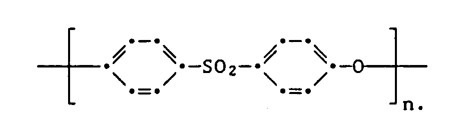

Polyimid 1: Ein Polyimid mit Phenylindaneinheiten mit einer Glasumwandlungstemperatur von 305°C und einem durchschnittlichen Molekulargewicht von ca. 65'000 (Matrimid® 5218, Ciba-Geigy).

Polyetherimid 1: Ein Polyetherimid mit wiederkehrenden Einheiten der Formel 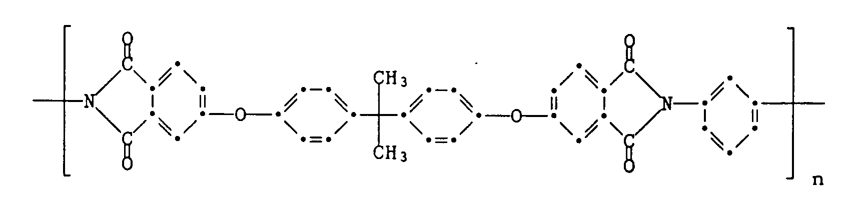
und einer Glasumwandlungstemperatur von 219°C, (Ultem® 1000 der General Electric).

### II. Anwendungsbeispiele

Beispiel A1: 165 g des Polyetherimids gemäss Beispiel 1, 50 g Epoxidharz al, 50 g Epoxidharz b1 und 65 g 4,4′-Dihydroxydiphenylether werden in 765 g Methylenchlorid gelöst. Mit einer Rakel wird mit der Lösung auf einem Silikonpapier ein Film gezogen. Nach dem Trocknen (12 h bei 50°C und 30 min bei 90°C unter Vakuum) entsteht ein homogener zäher Film. Mehrere Lagen des Films werden während 10 min bei 20°C und ca. 300 kPA gepresst und anschliessend während 3 h bei 210°C im Ofen gehärtet. Der gehärtete Formteil (30 x 30 x 1 mm) hat eine einheitliche Tg (gemessen mittels thermomechanischer Analyse) von 193°C (Erweichungsbeginn bei 169°C).

Beispiel A2: Je 50 g Epoxidharz a1 und Epoxidharz b1 werden zu einer Lösung von 82 g des Polyetherimids gemäss Beispiel 1 und 82 g eines Polyimids mit Phenylindaneinheiten mit einer Glasumwandlungstemperatur von 305°C und einem durchschnittlichen Molekulargewicht von ca. 65000 (Matrimid® 5218, Ciba-Geigy) in Methylenchlorid zugegeben und gut gerührt. Die Lösung wird auf ca. 40 Gew.% Harzgehalt eingeengt. Anschliessend wird eine Lösung von 65 g 4,4′-Dihydroxydiphenylether in Methylethylketon unter Rühren zugegeben. Nach Abdunsten des Lösungsmittels bis ca. 70 Gew.% Feststoffgehalt wird ein Film gezogen und entsprechend Beispiel A1 verarbeitet. An den erhaltenen Formteilen wird eine Tg von 225°C (Beginn der Glasumwandlung bei 199°C) gemessen.

Beispiel A3: Bei Wiederholung des Beispiels A1 aber unter Verwendung von 165 g des Polyethersulfons mit OH-Endgruppen als Thermoplast wird nach der Härtung eine Tg von 165°C gemessen.

Beispiel A4: 30 g Polyethersulfon mit OH-Endgruppen werden in 300 g Methylenchlorid gelöst. Nach Zugabe von 15 g Epoxidharz a2 und 85 g Epoxidharz b1 wird das Lösungsmittel abgedampft, die Mischung wird auf 140°C erwärmt und 40 g 2,7-Dihydroxynaphthalin werden beigegeben. Nach Abkühlung auf 120°C werden 0,1 g 2-Ethyl-4-methylimidazol zugegeben und die Mischung wird in eine Aluminiumform (4 x 80 x 80 mm) gegossen. Nach einer Härtung während 2 h bei 140°C und 3 h bei 180°C werden folgende Eigenschaften bestimmt:
Tg = 128°C
Biegefestigkeit (ISO 178) = 150 MPa
Biegedehnung (ISO 178) = 12,7 %
Schlagbiegezähigkeit (ISO 179) = 83 kJ/m².

Beispiel A5: 60 g Polyethersulfon mit OH-Endgruppen und 20 g Polyethersulfon 1 werden in 200 g Methylenchlorid gelöst. Anschliessend werden 15 g Epoxidharz a2 und 35 g Epoxidharz b1 zugegeben und mit der Thermoplastlösung gut vermischt. Nach Abdampfen des Lösungsmittels bis zu einer ca. 60 Gew.%-igen Lösung wird eine zweite Lösung von 40,3 g 2,7-Dihydroxynaphthalin und 0,1 g 2-Ethyl-4-methylimidazol in 40,3 g Methylethylketon unter Rühren zugetropft. Das Lösungsmittel wird weiter unter Rühren abgedampft bis eine klare Lösung entsteht. Mit einer Rakel wird auf einem Silikonpapier ein Film gezogen. Nach dem Trocknen (12 h bei 50°C und 30 min bei 90°C unter Vakuum) entsteht ein homogener, zäher Film. Mehrere Lagen des Films werden während 10 min bei 200°C gepresst und anschliessend 2 h bei 200°C im Ofen gehärtet. Der gehärtete Formteil (30 x 30 x 1 mm) hat eine Tg von 155°C. (Erweichungsbeginn bei 141°C).

Ein Teil der Lösung wird zur Imprägnierung eines Gewebes aus längsgerichteten Kohlefasern (T 300), die mit wenig Thermoplastfasern als Schuss zusammengehalten werden ("Quasi-UD-Gewebe" G 827 von Brochier SA) verwendet. Nach Trocknen und Pressen werden Laminatplatten mit folgenden Eigenschaften erhalten:
Biegefestigkeit quer zur Faser (ISO 178) = 119 MPa
Randfaserdehnung ε_{⊥} (ISO 178) = 1,57 %
Interlaminare Scherfestigkeit (DIN 29971) = 83 MPa
Beispiel A6: 60 g Polyethersulfon mit OH-Endgruppen werden in 100 g Methylenchlorid gelöst und anschliessend werden 15 g Epoxidharz a2 und 85 g Epoxidharz b1 zugegeben. Nach Abdampfen des Lösungsmittels werden 0,1 g 2-Ethyl-4-methylimidazol zugegeben, und die Mischung wrid während 1 h bei 140°C gerührt (Vorreaktion). Eine Lösung von 80 g Polyethersulfon 1 in 150 g Methylenchlorid wird zugegeben und das Lösungsmittel wird bis zu 10 Gew.% Lösungsmittelgehalt eingedampft. Anschliessend werden 40,3 g 2,7-Dihydroxynaphthalin und weitere 0,1 g 2-Ethyl-4-methylimidazol in Methylethylketon gelöst (ca. 50%-ig) und tropfenweise unter Rühren zugegeben. Bei gleichem Vorgehen wie in Beispiel A1 werden Plättchen mit einer Tg von 158°C (Beginn der Glasumwandlung: 149°C) erhalten.

Beispiel A7: Bei gleichem Vorgehen wie in Beispiel A6, jedoch unter Verwendung von 80 g Polyimid 1 statt Polyethersulfon 1 wird eine Tg von 160°C gemessen.

Beispiel A8: Bei Wiederholung von Beispiel A2, aber unter Verwendung von 82 g Polyethersulfon mit OH-Endgruppen statt Polyetherimid wird eine Tg von 154°C gemessen (Erweichungsbeginn 144°C).

Beispiel A9: 60 g Polyethersulfon mit OH-Endgruppen und 80 g Polyethersulfon 1 werden in 250 g Methylenchlorid gelöst und anschliessend werden 40 g Epoxidharz a3 und 60 g Epoxidharz b1 zugegeben und gut gemischt. Nach dem Eindampfen des Lösungsmittels auf ca. 10% wird unter Rühren eine 50 Gew.%-ige Lösung von 46,3 g 2,7-Dihydroxynaphthalin und 0,1 g 2-Ethyl-4-methylimidazol in Methylethylketon zugetropft. Mit dieser Mischung wird ein Film auf Silikonpapier hergestellt und 12 h bei 50°C und anschliessend 30 min bei 90°C unter Vakuum getrocknet. Der Film wird geschnitten und in der Laborpresse zu einem Reinharzplättchen bei 200°C während 2 min gepresst. Nach dem Aushärten im Ofen bei 200°C während 2 h wird am Formkörper eine Tg von 184°C (Erweichungsbeginn 161°C) gemessen.

Beispiel A10: Bei Wiederholung des Beispiels A2 aber unter Verwendung von 82 g Polyetherimid 1 statt Polyimid 1 wird eine Tg von 207°C (Erweichungsbeginn 179°C) gemessen.

Beispiel A11: 25 g Polyetherimid gemäss Beispiel 3 werden in 200 g CH₂Cl₂ gelöst und 40 g Epoxidharz a3 und 60 g Epoxidharz b1 werden zugegeben. Das Lösungsmittel wird unter Erwärmung abgedampft und die verbleibende Mischung wird anschliessend nach Zugabe von 58 g 4,4′-Dihydroxydiphenylether und 0,1 g 2-Phenylimidazol wie im Beispiel A4 verarbeitet. Die erhaltenen Formkörper haben folgende Eigenschaften:
Tg = 115°C
Biegefestigkeit (ISO 178) = 122 MPa
Biegedehnung (ISO 178) = >13,5% (ohne Bruch).

Beispiel A12: Entsprechend Beispiel A5 wird ein Laminat hergestellt mit 82 g Polyetherimid gemäss Beispiel 2, 82 g Polyimid 1, 50 g Epoxidharz a1, 50 g Epoxidharz b1, und 65 g 4,4′-Dihydroxydiphenylether. Das Laminat hat folgende Eigenschaften:
Tg = 225°C
Biegefestigkeit in Hauptfaserrichtung = 1204 MPa
Biegefestigkeit quer zur Hauptfaserrichtung = 76 MPa.

Beispiel A13: Bei Verwendung von 82 g Polyetherimid 1 anstelle von Polyimid 1 und sonst gleicher Zusammensetzung und Verarbeitung wie Beispiel A12 erhält man ein Laminat mit den folgenden Eigenschaften:
Tg = 207°C
Biegefestigkeit in Hauptfaserrichtung = 1395 MPa
Biegefestigkeit quer zur Hauptfaserrichtung = 65 MPa.

## Patentansprüche (Patentansprüche für folgende(n) Vertragsstaat(en): DE, FR, GB, IT, NL, SE)

1. Lagerstabiles, heisshärtbares Stoffgemisch enthaltend
(a) 5-70 Gewichtsteile eines Epoxidharzes einer Funktionalität von mindestens 3,
(b) 95-30 Gewichtsteile eines Epoxidharzes einer Funktionalität von 2-2,5,
(c) ein Diphenol, wobei die Menge des Diphenols so gewählt wird, dass pro Epoxidäquivalent der Epoxidharze (a) und (b) 0,6-1,2 Hydroxyläquivalente des Diphenols (c) eingesetzt werden, und
(d) 10-150 Gewichtsteile, bezogen auf 100 Gewichtsteile der Komponenten (a) bis (c), eines mit dem Gemisch der Komponenten (a) bis (c) verträglichen Thermoplasten mit phenolischen Endgruppen und mit einer Glasumwandlungstemperatur von mindestens 150°C.

2. Gemisch nach Anspruch 1, worin die Epoxidharze (a) und (b) einen Epoxidgehalt von 5-11 Aequivalenten/kg haben, und Glycidylether, Glycidylester oder N-Glycidylderivate einer cycloaliphatischen, einer aromatischen oder heterocyclischen Verbindung sind.

3. Gemisch nach Anspruch 1, worin die Epoxidharze (a) und (b) Epoxinovolake oder Glycidylderivate eines Bisphenols, eines aromatischen Diamins, eines Aminophenols, eines Hydantoins oder eines Tetramethylolcyclohexans sind.

4. Gemisch nach Anspruch 1, worin das Epoxidharz (a) eine Funktionalität von 3 bis 4 aufweist und ein Epoxiphenolnovolak oder ein Glycidylderivat eines aromatischen Diamins, eines Aminophenols oder eines Tetramethylolcyclohexans ist.

5. Gemisch nach Anspruch 1, worin das Epoxidharz (b) eine Funktionalität von 2 bis 2,2 aufweist und ein Epoxiphenolnovolak oder ein Glycidylderivat von Bisphenol A oder von Bisphenol F ist.

6. Gemisch nach Anspruch 1, worin das Diphenol (c) eine Verbindung der Formeln I, Ia oder II ist 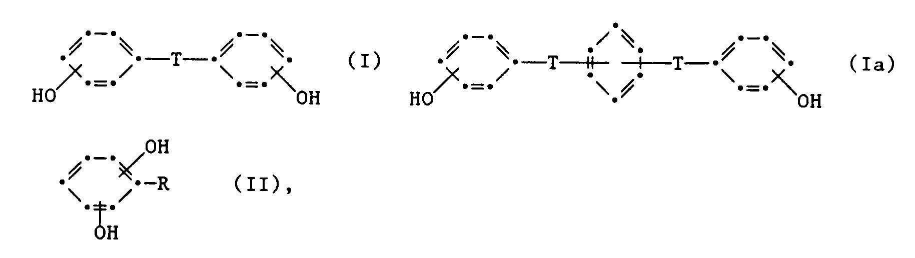 worin T die direkte Bindung, Methylen, Isopropyliden, O, S, CO oder SO₂ bedeutet und R für Wasserstoff oder C₁-C₄-Alkyl steht, ein Dihydroxynaphthalin oder ein Gemisch dieser Verbindungen ist.

7. Gemisch nach Anspruch 1, worin das Diphenol (c) Bisphenol A, Bisphenol F, Bisphenol P, Bisphenol M, 4,4′-Dihydroxydiphenylsulfid, 2,6-Dihydroxynaphthalin, 4,4′-Dihydroxydiphenylether oder 2,7-Dihydroxynaphthalin ist.

8. Gemisch nach Anspruch 1, das zusätzlich zu den Komponenten (a) bis (d) noch (c1) 0,05-5 Gew.%, bezogen auf die Epoxidharze (a) und (b), eines Beschleunigers enthält.

9. Gemisch nach Anspruch 1, das zusätzlich zu den Komponenten (a) bis (d) noch (e) einen Thermoplast ohne phenolische Endgruppen und mit einer Glasumwandlungstemperatur von mindestens 180°C enthält, wobei die Gesamtmenge der Thermoplast-Komponenten (d) und (e) 10-150 Gewichtsteile, bezogen auf 100 Gewichtsteile der Komponenten (a) bis (c), beträgt.

10. Gemisch nach den Ansprüchen 1 oder 9, worin der Thermoplast (d) und gegebenenfalls (e) ein Polyimid, ein Polyetherimid, ein Polysulfon ein Polyethersulfon, ein Polyether oder ein Polyetherketon ist.

11. Gemisch nach den Ansprüchen 1 und 10, worin der Thermoplast mit phenolischen Endgruppen (d) ein Polyethersulfon, ein Polyimid oder ein Polyetherimid ist.

12. Gemisch nach Anspruch 11, worin das Polyimid oder das Polyetherimid als Diamin ein Phenylindandiamin und/oder ein 2,2′-Bis(aminophenoxy)biphenyl enthält.

13. Gemisch nach den Ansprüchen 1, 8 oder 9 enthaltend 15 bis 50 Gewichtsteile des Epoxidharzes (a), 85 bis 50 Gewichtsteile des Epoxidharzes (b), eine Menge des Diphenols (c), so dass 0,7-1,1 Hydroxyläquivalente des Diphenols pro Epoxidäquivalent der Harze (a) und (b) eingesetzt werden, gegebenenfalls 0,1-1 Gew.% des Beschleunigers (c1) bezogen auf die Menge von (a) und (b), und 20-130 Gewichtsteile des Thermoplasten (d) und gegebenenfalls (e) bezogen auf 100 Gewichtsteile der Komponenten (a) bis (c).

14. Formkörper hergestellt durch Härtung des Gemisches nach Anspruch 1.

15. Prepregs oder Klebefilme hergestellt mit dem Gemisch nach Anspruch 1.

## Patentansprüche (Patentansprüche für folgende(n) Vertragsstaat(en): ES)

1. Verfahren zur Herstellung von vernetzten Produkten durch Härtung eines lagerstabilen, heisshärtbaren Stoffgemisches enthaltend
(a) 5-70 Gewichtsteile eines Epoxidharzes einer Funktionalität von mindestens 3,
(b) 95-30 Gewichtsteile eines Epoxidharzes einer Funktionalität von 2-2,5,
(c) ein Diphenol, wobei die Menge des Diphenols so gewählt wird, dass pro Epoxidäquivalent der Epoxidharze (a) und (b) 0,6-1,2 Hydroxyläquivalente des Diphenols (c) eingesetzt werden, und
(d) 10-150 Gewichtsteile, bezogen auf 100 Gewichtsteile der Komponenten (a) bis (c), eines mit dem Gemisch der Komponenten (a) bis (c) verträglichen Thermoplasten mit phenolischen Endgruppen und mit einer Glasumwandlungstemperatur von mindestens 150°C.

2. Verfahren nach Anspruch 1, worin die Epoxidharze (a) und (b) einen Epoxidgehalt von 5-11 Aequivalenten/kg haben, und Glycidylether, Glycidylester oder N-Glycidylderivate einer cycloaliphatischen, einer aromatischen oder heterocyclischen Verbindung sind.

3. Verfahren nach Anspruch 1, worin die Epoxidharze (a) und (b) Epoxinovolake oder Glycidylderivate eines Bisphenols, eines aromatischen Diamins, eines Aminophenols, eines Hydantoins oder eines Tetramethylolcyclohexans sind.

4. Verfahren nach Anspruch 1, worin das Epoxidharz (a) eine Funktionalität von 3 bis 4 aufweist und ein Epoxiphenolnovolak oder ein Glycidylderivat eines aromatischen Diamins, eines Aminophenols oder eines Tetramethylolcyclohexans ist.

5. Verfahren nach Anspruch 1, worin das Epoxidharz (b) eine Funktionalität von 2 bis 2,2 aufweist und ein Epoxiphenolnovolak oder ein Glycidylderivat von Bisphenol A oder von Bisphenol F ist.

6. Verfahren nach Anspruch 1, worin das Diphenol (c) eine Verbindung der Formeln I, Ia oder II ist 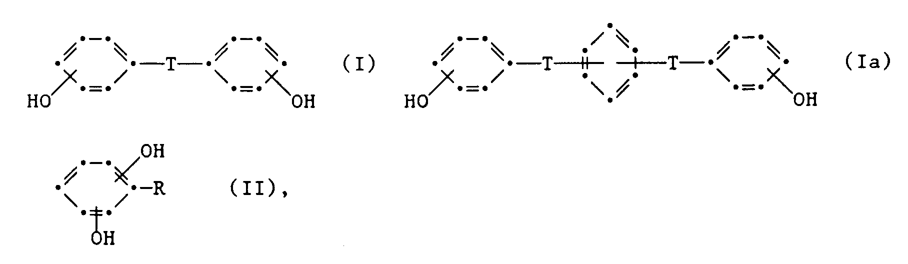 worin T die direkte Bindung, Methylen, Isopropyliden, O, S, CO oder SO₂ bedeutet und R für Wasserstoff oder C₁-C₄-Alkyl steht, ein Dihydroxynaphthalin oder ein Gemisch dieser Verbindungen ist.

7. Verfahren nach Anspruch 1, worin das Diphenol (c) Bisphenol A, Bisphenol F, Bisphenol P, Bisphenol M, 4,4′-Dihydroxydiphenylsulfid, 2,6-Dihydroxynaphthalin, 4,4′-Dihydroxydiphenylether oder 2,7-Dihydroxynaphthalin ist.

8. Verfahren nach Anspruch 1, das zusätzlich zu den Komponenten (a) bis (d) noch (c1) 0,05-5 Gew.%, bezogen auf die Epoxidharze (a) und (b), eines Beschleunigers enthält.

9. Verfahren nach Anspruch 1, das zusätzlich zu den Komponenten (a) bis (d) noch (e) einen Thermoplast ohne phenolische Endgruppen und mit einer Glasumwandlungstemperatur von mindestens 180°C enthält, wobei die Gesamtmenge der Thermoplast-Komponenten (d) und (e) 10-150 Gewichtsteile, bezogen auf 100 Gewichtsteile der Komponenten (a) bis (c), beträgt.

10. Verfahren nach den Ansprüchen 1 oder 9, worin der Thermoplast (d) und gegebenenfalls (e) ein Polyimid, ein Polyetherimid, ein Polysulfon ein Polyethersulfon, ein Polyether oder ein Polyetherketon ist.

11. Verfahren nach den Ansprüchen 1 und 10, worin der Thermoplast mit phenolischen Endgruppen (d) ein Polyethersulfon, ein Polyimid oder ein Polyetherimid ist.

12. Verfahren nach Anspruch 11, worin das Polyimid oder das Polyetherimid als Diamin ein Phenylindandiamin und/oder ein 2,2′-Bis(aminophenoxy)biphenyl enthält.

13. Verfahren nach den Ansprüchen 1, 8 oder 9 enthaltend 15 bis 50 Gewichtsteile des Epoxidharzes (a), 85 bis 50 Gewichtsteile des Epoxidharzes (b), eine Menge des Diphenols (c), so dass 0,7-1,1 Hydroxyläquivalente des Diphenols pro Epoxidäquivalent der Harze (a) und (b) eingesetzt werden, gegebenenfalls 0,1-1 Gew.% des Beschleunigers (c1) bezogen auf die Menge von (a) und (b), und 20-130 Gewichtsteile des Thermoplasten (d) und gegebenenfalls (e) bezogen auf 100 Gewichtsteile der Komponenten (a) bis (c).

## Claims (Claims for the following Contracting State(s): DE, FR, GB, IT, NL, SE)

1. A heat-curable composition of matter which is stable on storage and which contains
(a) 5-70 parts by weight of an epoxy resin having a functionality of at least 3,
(b) 95-30 parts by weight of an epoxy resin having a functionality of 2-2.5,
(c) a diphenol, the amount of the diphenol being so chosen that 0.6-1.2 hydroxyl equivalents of the diphenol (c) are employed per epoxide equivalent of the epoxy resins (a) and (b), and
(d) 10-150 parts by weight, relative to 100 parts by weight of the components (a) to (c), of a thermoplastic having phenolic end groups and having a glass transition temperature of at least 150°C which is compatible with the composition of the components (a) to (c).

2. A composition according to claim 1, wherein the epoxy resins (a) and (b) have an epoxide content of 5-11 equivalents/kg and are glycidyl ethers, glycidyl esters or N-glycidyl derivatives of a cycloaliphatic, aromatic or heterocyclic compound.

3. A composition according to claim 1, wherein the epoxy resins (a) and (b) are epoxy-novolaks or glycidyl derivatives of a bisphenol, an aromatic diamine, an aminophenol, a hydantoin or a tetramethylolcyclohexane.

4. A composition according to claim 1, wherein the epoxy resin (a) has a functionality of 3 to 4 and is an epoxyphenol novolak or a glycidyl derivative of an aromatic diamine, an aminophenol or a tetramethylolcyclohexane.

5. A composition according to claim 1, wherein the epoxy resin (b) has a functionality of 2 to 2.2 and is an epoxyphenol novolak or a glycidyl derivative of bisphenol A or of bisphenol F.

6. A composition according to claim 1, wherein the diphenol (c) is a compound of the formula I, Ia or II in which T is a direct bond, methylene, isopropylidene, O, S, CO or SO₂ and R is hydrogen, C₁-C₄alkyl or a dihydroxynaphthalene or a mixture of these compounds.

7. A composition according to claim 1, wherein the diphenol (c) is bisphenol A, bisphenol F, bisphenol P, bisphenol M, 4,4'-dihydroxydiphenyl sulfide, 2,6-dihydroxynaphthalene, 4,4'-dihydroxydiphenyl ether or 2,7-dihydroxynaphthalene.

8. A composition according to claim 1, which, in addition to the components (a) to (d) also contains (c1) 0.05-5% by weight of an accelerator, relative to the epoxy resins (a) and (b).

9. A composition according to claim 1, which, in addition to the components (a) to (d), also contains (e) a thermoplastic which has no phenolic end groups and has a glass transition temperaure of at least 180°C, the total amount of the thermoplastic components (d) and (e) being 10-150 parts by weight, relative to 100 parts by weight of the components (a) to (c).

10. A composition according to claims 1 or 9, wherein the thermoplastic (d) and, if appropriate, (e) is a polyimide, a polyether imide, a polysulfone, a polyether sulfone, a polyether or a polyether ketone.

11. A composition according to claims 1 and 10, wherein the thermoplastic having phenolic end groups (d) is a polyether sulfone, a polyimide or a polyether imide.

12. A composition according to claim 11, wherein the polyimide or the polyether imide contains, as the diamine, a phenylindanediamine and/or a 2,2'-bis-(aminophenoxy)-biphenyl.

13. A composition according to claims 1, 8 or 9, which contains 15 to 50 parts by weight of the epoxy resin (a), 85 to 50 parts by weight of the epoxy resin (b), such an amount of the diphenol (c) that 0.7-1.1 hydroxyl equivalents of the diphenol are employed per epoxide equivalent of the resins (a) and (b), if appropriate 0.1-1 % by weight of the accelerator (c1), relative to the amount of (a) and (b), and 20-130 parts by weight of the thermoplastic (d), and, if appropriate, (e), relative to 100 parts by weight of the components (a) to (c).

14. A shaped article prepared by curing the composition according to claim 1.

15. Prepregs or adhesive films prepared using the composition according to claim 1.

## Claims (Claims for the following Contracting State(s): ES)

1. A process for preparing crosslinked products by curing a heat-curable composition of matter which is stable on storage and which contains
(a) 5-70 parts by weight of an epoxy resin having a functionality of at least 3,
(b) 95-30 parts by weight of an epoxy resin having a functionality of 2-2.5,
(c) a diphenol, the amount of the diphenol being so chosen that 0.6-1.2 hydroxyl equivalents of the diphenol (c) are employed per epoxide equivalent of the epoxy resins (a) and (b), and
(d) 10-150 parts by weight, relative to 100 parts by weight of the components (a) to (c), of a thermoplastic having phenolic end groups and having a glass transition temperature of at least 150°C which is compatible with the composition of the components (a) to (c).

2. A process according to claim 1, wherein the epoxy resins (a) and (b) have an epoxide content of 5-11 equivalents/kg and are glycidyl ethers, glycidyl esters or N-glycidyl derivatives of a cycloaliphatic, aromatic or heterocyclic compound.

3. A process according to claim 1, wherein the epoxy resins (a) and (b) are epoxy-novolaks or glycidyl derivatives of a bisphenol, an aromatic diamine, an aminophenol, a hydantoin or a tetramethylolcyclohexane.

4. A process according to claim 1, wherein the epoxy resin (a) has a functionality of 3 to 4 and is an epoxyphenol novolak or a glycidyl derivative of an aromatic diamine, an aminophenol or a tetramethylolcyclohexane.

5. A process according to claim 1, wherein the epoxy resin (b) has a functionality of 2 to 2.2 and is an epoxyphenol novolak or a glycidyl derivative of bisphenol A or of bisphenol F.

6. A process according to claim 1, wherein the diphenol ((c) is a compound of the formulae I, Ia or II in which T is a direct bond, methylene, isopropylidene, O, S, CO or SO₂ and R is hydrogen, C₁-C₄alkyl or a dihydroxynaphthalene or a mixture of these compounds.

7. A process according to claim 1, wherein the diphenol (c) is bisphenol A, bisphenol F, bisphenol P, bisphenol M, 4,4'-dihydroxydiphenyl sulfide, 2,6-dihydroxynaphthalene, 4,4'-dihydroxydiphenyl ether or 2,7-dihydroxynaphthalene.

8. A process according to claim 1, which, in addition to the components (a) to (d) also contains (c1) 0.05-5% by weight of an accelerator, relative to the epoxy resins (a) and (b).

9. A process according to claim 1, which, in addition to the components (a) to (d), also contains (e) a thermoplastic which has no phenolic end groups and has a glass transition temperaure of at least 180°C, the total amount of the thermoplastic components (d) and (e) being 10-150 parts by weight, relative to 100 parts by weight of the components (a) to (c).

10. A process according to claims 1 or 9, wherein the thermoplastic (d) and, if appropriate, (e) is a polyimide, a polyether imide, a polysulfone, a polyether sulfone, a polyether or a polyether ketone.

11. A process according to claims 1 and 10, wherein the thermoplastic having phenolic end groups (d) is a polyether sulfone, a polyimide or a polyether imide.

12. A process according to claim 11, wherein the polyimide or the polyether imide contains, as the diamine, a phenylindanediamine and/or a 2,2'-bis-(aminophenoxy)-biphenyl.

13. A process according to claims 1, 8 or 9, which contains 15 to 50 parts by weight of the epoxy resin (a), 85 to 50 parts by weight of the epoxy resin (b), such an amount of the diphenol (c) that 0.7-1.1 hydroxyl equivalents of the diphenol are employed per epoxide equivalent of the resins (a) and (b), if appropriate 0.1-1 % by weight of the accelerator (c1), relative to the amount of (a) and (b), and 20-130 parts by weight of the thermoplastic (d), and, if appropriate, (e), relative to 100 parts by weight of the components (a) to (c).

## Revendications (Revendications pour l'(les) Etat(s) contractant(s) suivant(s): DE, FR, GB, IT, NL, SE)

1. Mélange de matières stable au stockage et durcissable à la chaleur comportant :
(a) de 5 à 70 parties en poids d'une résine époxyde ayant une fonctionnalité d'au moins 3,
(b) de 95 à 30 parties en poids d'une résine époxyde ayant une fonctionnalité de 2 à 2,5,
(c) un diphénol, la quantité du diphénol étant choisie de telle façon que l'on utilise de 0,6 à 1,2 équivalents d'hydroxyle du diphénol (c) par équivalent époxyde des résines époxydes (a) et (b), et
(d) de 10 à 150 parties en poids, calculé sur 100 parties en poids des composants (a) à (c), d'un thermoplastique compatible avec le mélange des composants (a) à (c) et ayant des groupes terminaux phénoliques ainsi qu'une température de transition vitreuse d'au moins 150° C.

2. Mélange selon la revendication 1, où les résines époxydes (a) et (b) ont une teneur en époxyde de 5 à 11 équivalents/kg et sont des éthers glycidyliques, des esters glycidyliques ou des dérivés N-glycidyliques d'un composé cycloaliphatique, aromatique ou hétérocyclique.

3. Mélange selon la revendication 1, où les résines époxydes (a) et (b) sont des novolaques époxydées ou des dérivés glycidyliques d'un bisphénol, d'une diamine aromatique, d'un aminophénol, d'une hydantoine ou d'un tétraméthylolcyclohexane.

4. Mélange selon la revendication 1, où la résine époxyde (a) présente une fonctionnalité de 3 à 4 et est une novolaque époxydée modifiée au phénol ou un dérivé glycidylique d'une diamine aromatique, d'un aminophénol ou d'un tétraméthylolcyclohexane.

5. Mélange selon la revendication 1, où la résine époxyde (b) présente une fonctionnalité de 2 à 2,2 et est une novolaque époxydée modifée au phénol ou un dérivé glycidylique de bisphénol A ou de bisphénol F.

6. Mélange selon la revendication 1, où le diphénol (c) est un composé de formule I, Ia ou II 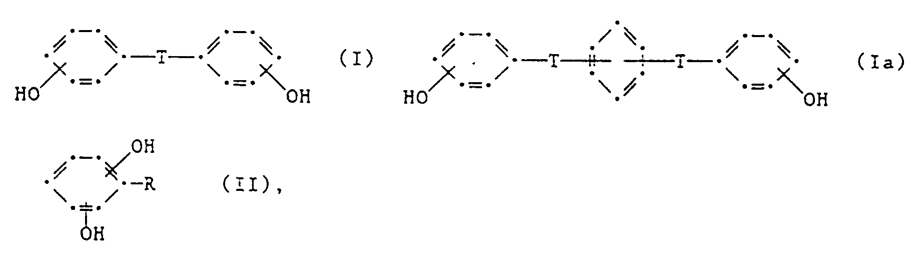 où T représente la liaison directe, le méthylène, l'isopropylidène, O, S, CO ou SO₂ et R représente l'hydrogène ou un alkyle en C₁-C₄, un dihydroxynaphtalène ou un mélange de ces composés.

7. Mélange selon la revendication 1, où le diphénol (c) est le bisphénol A, le bisphénol F, le bisphénol P, le bisphénol M, le sulfure de 4,4'-dihydroxydiphényle, le 2,6-dihydroxynaphtalène, le 4,4'-dihydroxy-diphényléther ou le 2,7-dihydroxy-naphtalène.

8. Mélange selon la revendication 1, qui, en plus des composants (a) à (d), comporte encopre (c1) de 0,05 à 5 % en poids, calculé sur les résines époxydes (a) et (b), d'un accélérateur.

9. Mélange selon la revendication 1, qui, en plus des composants (a) à (d), comporte encore (e) un thermoplastique sans groupes terminaux phénoliques et qui a une température de transition vitreuse d'au moins 180°C, la teneur totale en composants thermoplastiques (d) et (e) étant de 10 à 150 parties en poids, calculée sur 100 parties en poids des composants (a) à (c).

10. Mélange selon les revendications 1 ou 9, où le thermoplastique (d) et éventuellement (e), est un polyimide, un polyétherimide, une polysulfone, une polyéthersulfone, un polyéther ou une polyéthercétone.

11. Mélange selon les revendications 1 et 10, où le thermoplastique avec des groupes terminaux phénoliques (d) est une polyéthersulfone, un polyimide ou un polyétherimide.

12. Mélange selon la revendication 11, où le polyimide ou le polyétherimide comporte en tant que diamine une phénylindanediamine et/ou un 2,2'-bis(aminophénoxy)biphényle.

13. Mélange selon les revendications 1, 8 ou 9, comportant de 15 à 50 parties en poids de la résine époxyde (a), de 85 à 50 parties en poids de la résine époxyde (b), une quantité du diphénol (c) de telle façon qu'on utilise de 0,7 à 1,1 équivalents d'hydroxyle du diphénol par équivalent époxyde des résines (a) et (b), éventuellement de 0,1 à 1 % en poids de l'accélérateur (c1) calculé sur la quantité de (a) et de (b), et de 20 à 130 parties en poids du thermoplastique (d) et éventuellement (e), calculé sur 100 parties en poids des composants (a) à (c).

14. Objet moulé préparé par durcissement de la mélange selon la revendication 1.

15. Préimprégné ou film adhésif préparé avec la mélange selon la revendication 1.

## Revendications (Revendications pour l'(les) Etat(s) contractant(s) suivant(s): ES)

1. Procédé pour préparer des produits réticulés par durcissement d'un mélange de matières stable au stockage et durcissable à la chaleur comportant :
(a) de 5 à 70 parties en poids d'une résine époxyde ayant une fonctionnalité d'au moins 3,
(b) de 95 à 30 parties en poids d'une résine époxyde ayant une fonctionnalité de 2 à 2,5,
(c) un diphénol, la quantité du diphénol étant choisie de telle façn que l'on utilise de 0,6 à 1,2 équivalents d'hydroxyle du diphénol (c) par équivalent époxyde des résines époxydes (a) et (b), et
(d) de 10 à 150 parties en poids, calculé sur 100 parties en poids des composants (a) à (c), d'un thermoplastique compatible avec le mélange des composants (a) à (c) et ayant des groupes terminaux phénoliques, ainsi qu'une température de transition vitreuse d'au moins 150° C.

2. Procédé selon la revendication 1, où les résines époxydes (a) et (b) ont une teneur en époxyde de 5 à 11 équivalents/kg et sont des éthers glycidyliques, des esters glycidyliques ou des dérivés N-glycidyliques d'un composé cycloaliphatique, aromatique ou hétérocyclique.

3. Procédé selon la revendication 1, où les résines époxydes (a) et (b) sont des novolaques époxydées ou des dérivés glycidyliques d'un bisphénol, d'une diamine aromatique, d'un aminophénol, d'une hydantoine ou d'un tétraméthylolcyclohexane.

4. Procédé selon la revendication 1, où la résine époxyde (a) présente une fonctionnalité de 3 à 4 et est une novolaque époxydée modifié au phénol ou un dérivé de glycidyle d'une diamine aromatique, d'un aminophénol ou d'un tétraméthylolcyclohexane.

5. Procédé selon la revendication 1, où la résine époxyde (b) présente une fonctionnalité de 2 à 2,2 et est une novolaque époxydée modifiée au phénol ou un dérivé glycidylique de bisphénol A ou de bisphénol F.

6. Procédé selon la revendication 1, où le diphénol (c) est un composé de formule I, Ia ou II 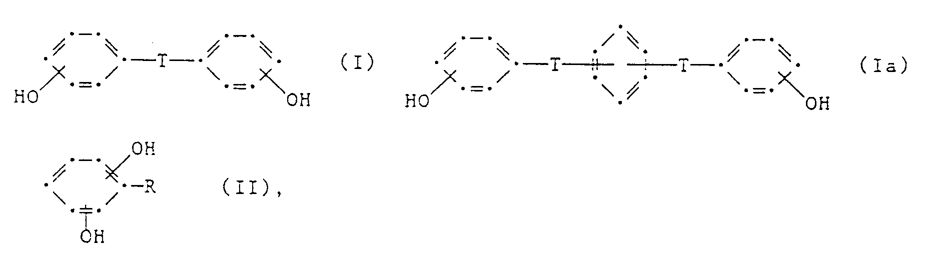 où T représente la liaison directe, le méthylène, l'isopropylidène, O, S, CO ou SO₂ et R représente l'hydrogène ou un alkyle en C₁-C₄, un dihydroxynaphtalène ou un mélange de ces composés.

7. Procédé selon la revendication 1, où le diphénol (c) est le bisphénol A, le bisphénol F, le bisphénol P, le bisphénol M, le sulfure de 4,4'-dihydroxydiphényle, le 2,6-dihydroxynaphtalène, le 4,4'-dihydroxy-diphényléther ou le 2,7-dihydroxy-naphtalène.

8. Procédé selon la revendication 1, qui, en plus des composants (a) à (d), comporte encore (c1) de 0,05 à 5 % en poids, calcule sur les résines époxydes (a) et (b), d'un accélérateur.

9. Procédé selon la revendication 1, qui, en plus des composants (a) à (d), comporte encore (e) un thermoplastique sans groupes terminaux phénoliques et qui a une température de transition vitreuse d'au moins 180°C, la teneur totale en composants thermoplastiques (d) et (e) étant de 10 à 150 parties en poids, calculée sur 100 parties en poids des composants (a) à (c).

10. Procédé selon les revendications 1 ou 9, où le thermoplastique (d) et éventuellement (e) est un polyimide, un polyétherimide, une polysulfone, une polyéthersulfone, un polyéther ou une polyéthercétone.

11. Procédé selon les revendications 1 et 10, où le thermoplastique avec des groupes terminaux phénoliques (d) est une polyéthersulfone, un polyimide ou un polyétherimide.

12. Procédé selon la revendication 11, où le polyimide ou le polyétherimide comporte en tant que diamine une phénylindanediamine et/ou un 2,2'-bis(aminophénoxy)biphényle.

13. Procédé selon les revendications 1, 8 ou 9, comportant de 15 à 50 parties en poids de la résine époxyde (a), de 85 à 50 parties en poids de la résine époxyde (b), une quantité du diphénol (c) de telle façon qu'on utilise de 0,7 à 1,1 équivalents d'hydroxyle du diphénol par équivalent époxyde des résines (a) et (b), éventuellement de 0,1 à 1 % en poids de l'accélérateur (c1) calculé sur la quantité de (a) et de (b), et de 20 à 130 parties en poids du thermoplastique (d) et éventuellement (e), calculé sur 100 parties en poids des composants (a) à (c).
